(19) Europäisches Patentamt
European Patent Office
Office européen des brevets

(11) EP 3 414 284 B1

(12) # FASCICULE DE BREVET EUROPEEN

(45) Date de publication et mention de la délivrance du brevet:
**18.11.2020 Bulletin 2020/47**

(21) Numéro de dépôt: **17709143.6**

(22) Date de dépôt: **10.02.2017**

(51) Int Cl.:
***C08L 7/00*** (2006.01) ***C08L 9/00*** (2006.01)
***C08K 3/36*** (2006.01) ***B60C 1/00*** (2006.01)

(86) Numéro de dépôt international:
**PCT/FR2017/050312**

(87) Numéro de publication internationale:
**WO 2017/137711 (17.08.2017 Gazette 2017/33)**

(54) **COMPOSITION DE CAOUTCHOUC COMPRENANT UNE SILICE ESSENTIELLEMENT SPHÉRIQUE ET PEU STRUCTURÉE**

KAUTSCHUKZUSAMMENSETZUNG MIT EINEM NIEDRIG STRUKTURIERTEN UND WESENTLICH SPHÄRISCHEN SILIKA

RUBBER COMPOSITION COMPRISING A LITTLE STRUCTURED AND ESSENTIALLY SPHERICAL SILICA

(84) Etats contractants désignés:
**AL AT BE BG CH CY CZ DE DK EE ES FI FR GB GR HR HU IE IS IT LI LT LU LV MC MK MT NL NO PL PT RO RS SE SI SK SM TR**

(30) Priorité: **12.02.2016 FR 1651141**

(43) Date de publication de la demande:
**19.12.2018 Bulletin 2018/51**

(73) Titulaire: **Compagnie Générale des Etablissements Michelin**
**63000 Clermont-Ferrand (FR)**

(72) Inventeurs:
- **ABAD, Vincent**
**63040 Clermont-Ferrand Cedex 9 (FR)**
- **FOGLIENI, Baptiste**
**63040 Clermont-Ferrand Cedex 9 (FR)**
- **DESCOMBES, Flora**
**63040 Clermont-Ferrand Cedex 9 (FR)**
- **PAGANO, Salvatore**
**63040 Clermont-Ferrand Cedex 9 (FR)**

(74) Mandataire: **Bocchi, Brigitte**
**Manufacture Française des Pneumatiques Michelin**
**CBS/CORP/J/PI - F35 - Ladoux**
**23, place des Carmes - Déchaux**
**63040 Clermont-Ferrand Cedex 9 (FR)**

(56) Documents cités:
**WO-A1-2015/097195 US-A1- 2005 004 297**
**US-A1- 2011 152 434**

- **TADIELLO L; D'ARIENZO M; DI CREDICO B; HANEL T; MATEJKA L; MAURI M; MORAZZONI F; SIMONUTTI R; SPIRKOVA M; SCOTTI R: "The filler-rubber interface in styrene butadiene nanocomposites with anisotropic silica particles: Morphology and dynamic properties", SOFT MATTER, vol. 11, no. 20, 28 mai 2015 (2015-05-28), pages 4022-4033, XP002761141,**
- **SCOTTI ROBERTO ET AL: "Shape controlled spherical (0D) and rod-like (1D) silica nanoparticles in silica/styrene butadiene rubber nanocomposites: Role of the particle morphology on the filler reinforcing effect", POLYMER, vol. 55, no. 6, 31 janvier 2014 (2014-01-31), pages 1497-1506, XP028630350, ISSN: 0032-3861, DOI: 10.1016/J.POLYMER.2014.01.025**

Il est rappelé que: Dans un délai de neuf mois à compter de la publication de la mention de la délivrance du brevet européen au Bulletin européen des brevets, toute personne peut faire opposition à ce brevet auprès de l'Office européen des brevets, conformément au règlement d'exécution. L'opposition n'est réputée formée qu'après le paiement de la taxe d'opposition. (Art. 99(1) Convention sur le brevet européen).



Printed by Jouve, 75001 PARIS (FR)

## Description

Le domaine de la présente invention est celui des compositions de caoutchouc diénique renforcées par une charge inorganique, destinées à la fabrication de produits finis ou semi-finis pour pneumatique, en particulier aux bandes de roulement de ces pneumatiques.

Depuis que les économies de carburant et la nécessité de protéger l'environnement sont devenues une priorité, il s'est avéré nécessaire de produire des produits semi-finis, notamment des bandes de roulements, pour des pneumatiques ayant une résistance au roulement réduite, sans pénalisation sur les autres performances telles que la résistance à l'usure.

En outre, la réglementation autour de la sécurité des pneumatiques encourage de plus en plus les manufacturiers à proposer des produits semi-finis et des pneumatiques procurant une adhérence améliorée sur les routes en condition sèche ou humide.

Pour atteindre ces objectifs de réduire la résistance au roulement et la résistance à l'usure tout en conservant une bonne adhérence sur sols secs et mouillés, de nombreuses solutions ont déjà été expérimentées. En particulier, les manufacturiers ont développé des compositions pour des bandes de roulement dans lesquelles le noir de carbone était remplacé par une silice précipitée particulière. En effet, certaines silices ont été identifiées comme particulièrement performantes pour atteindre ces objectifs. Ces silices présentent une surface spécifique BET comprise entre 100 et 250 $m^2/g$ et sont qualifiées de hautement dispersible (notée « HD » ou « HDS » pour « highly dispersible » ou « highly dispersible silica »). Elles sont utilisées dans les pneumatiques à basse résistance au roulement parfois qualifiés de « Pneus Verts » pour l'économie d'énergie offerte à l'usager. Comme exemple de telles silices, on peut citer notamment les silices Ultrasil 7000 de la société Evonik, la silice Zeosil 1165 MP de surface spécifique BET environ égale à 160 $m^2/g$ et commercialisée par Solvay, les silices Zeosil 1135 MP et Zeosil 1115 MP de la société Solvay, la silice Hi-Sil EZ150G de la société PPG, les silices Zeopol 8715, 8745 ou 8755 de la Société Huber.

Une autre possibilité pour atteindre ces objectifs a consisté à formuler des compositions de caoutchouc présentant des fractions volumiques de charges renforçantes et de diluants importantes associées à des élastomères synthétiques.

Par exemple, on peut citer la demande WO2012/069585A1 des Demanderesses qui décrit des compositions comprenant des taux de charges élevées (100 à 150 pce), et un système plastifiant comprenant une résine hydrocarbonée et une huile plastifiante, le taux de plastifiants total étant de l'ordre de 50 à 100 pce, avec environ 10 à 60 pce d'huile et 10 à 60 pce de résine, ces compositions permettant d'obtenir des bonnes propriétés d'adhérence sur sol mouillé sans pénaliser la résistance au roulement. La charge renforçante utilisée dans ces compositions est une silice de précipitation de surface spécifique supérieure à 100 $m^2/g$.

La demande EP2336231A1 décrit des compositions de caoutchouc à base d'un élastomère diénique et comprenant un système de charges renforçantes constitué, de noir de carbone, de 10 à 80 pce d'une silice précipitée hautement structurée et de 10 à 70 pce d'une silice peu structurée se présentant sous forme sphérique. La silice poreuse hautement structurée présente une surface spécifique BET allant de 45 à 550 $m^2/g$ et la silice peu structurée présente une surface spécifique BET allant de 15 à 25 $m^2/g$. La taille moyenne des particules de silice peu structurée est de 150 nm. Ces compositions, comparées à une composition comprenant un mélange de noir de carbone et d'une silice précipitée hautement structurée, présentent une bonne propriété de résistance au roulement mais des propriétés variables de résistance à l'usure.

WO2015/097195 divulgue des compositions à base d'élastomère, d'agent de couplage et de nanosilice (zeosil 1165MP 160 $m^2/g$).

Néanmoins, les manufacturiers cherchent toujours de nouvelles solutions pour continuer à améliorer les performances des compositions pour pneumatique et notamment la résistance au roulement, l'adhérence, l'usure...

Le problème technique que se propose de résoudre l'invention est d'améliorer encore le compromis entre les propriétés de résistance au roulement et de résistance à l'usure d'une composition de caoutchouc pour un produit semi-fini.

Ce but est atteint en ce que les Demanderesses viennent de trouver de manière surprenante au cours de leur recherches qu'une silice sous la forme de nanoparticules essentiellement sphériques et ayant une surface spécifique BET allant de 30 $m^2/g$ à 250 $m^2/g$ utilisée comme charge renforçante présente un pouvoir de renforcer les propriétés d'un élastomère de manière comparable, voire supérieure, à une silice précipitée hautement dispersible. Ladite silice sous la forme de nanoparticules essentiellement sphériques présente une bonne aptitude à s'incorporer et à se disperser dans la matrice élastomérique lors de son mélange.

Un avantage de la composition de caoutchouc selon l'invention est qu'elle présente un compromis résistance au roulement / résistance à l'usure amélioré.

Un autre avantage de la composition selon l'invention est qu'elle présente un compromis résistance au roulement / résistance à l'usure amélioré tout en conservant également de bonnes propriétés d'adhérence, notamment sur route en condition sèche ou humide.

Un autre avantage de la composition selon l'invention est qu'elle peut être utilisée avec de très faibles taux de zinc, tout en évitant le phénomène de grillage.

Le grillage (ou « scorching » en anglais) est un phénomène qui conduit rapidement au cours de la préparation des compositions de caoutchouc dans le mélangeur interne, à des vulcanisations prématurées engendrant des viscosités à l'état cru très élevées ce qui correspond à l'obtention de compositions de caoutchouc extrêmement difficiles à travailler et à mettre en œuvre industriellement.

Ainsi, un objet de la présente invention est une composition de caoutchouc à base d'un ou plusieurs élastomère(s) diénique(s), d'au moins une charge renforçante, d'au moins un agent de couplage, d'au moins un système de réticulation chimique, dans laquelle la charge renforçante comprend de la silice sous forme de nanoparticules essentiellement sphériques, la surface spécifique BET de cette silice allant de 30 $m^2/g$ à 250 $m^2/g$.

Préférentiellement, la surface spécifique BET de cette silice peut aller de 30 à 150 $m^2/g$, de manière encore plus préférée de 30 à 120 $m^2/g$, mieux de 30 à 100 $m^2/g$.

Préférentiellement, la silice sous forme de nanoparticules essentiellement sphériques présente un nombre de groupe silanol par $nm^2$ supérieur ou égal à 4, de préférence allant de 4 à 12, de manière plus préférée allant de 5 à 10.

La silice sous forme de nanoparticules essentiellement sphériques présente un indice de sphéricité supérieur ou égal à 0,80, de préférence allant de 0,80 à 0,99, de manière plus préférée allant de 0,85 à 0,99.

Préférentiellement, la silice sous forme de nanoparticules essentiellement sphériques peut être une silice fondue.

Préférentiellement, le taux de silice sous forme de nanoparticules essentiellement sphériques peut aller de 60 à 250 pce, de préférence 80 à 200 pce.

Préférentiellement, la taille médiane des nanoparticules essentiellement sphérique de silice peut être inférieure ou égale à 100 nm, de préférence elle peut aller de 10 à 80 nm, de manière encore plus préférée peut aller de 20 à 70 nm.

Préférentiellement, le ou les élastomère(s) diénique(s) peut (peuvent) être choisi(s) parmi les élastomères diéniques essentiellement insaturés.

De préférence, le ou les élastomère(s) diénique(s) peut (peuvent) être choisi(s) parmi le caoutchouc naturel, les polyisoprènes de synthèse, les polybutadiènes, les copolymères de butadiène, les copolymères d'isoprène et les mélanges de ces élastomères.

Selon un mode de réalisation, la composition peut comprendre de 50 à 100 pce d'un premier élastomère diénique, et optionnellement de 0 à 50 pce d'un deuxième élastomère diénique différent du premier élastomère diénique.

Selon une variante, la silice sous forme de nanoparticules essentiellement sphériques est la charge renforçante majoritaire.

Selon une autre variante, le poids de la silice sous forme de nanoparticules essentiellement sphériques représente plus de 60 %, de préférence plus de 90% du poids total de la charge renforçante.

Selon encore une autre variante, la charge renforçante est constituée de silice sous forme de nanoparticules essentiellement sphériques.

Selon encore une autre variante, la composition comprend en outre du noir de carbone.

Préférentiellement, le taux total de charge(s) renforçante(s) dans la composition peut aller de 60 à 300 pce, de préférence peut aller de 80 à 250 pce.

Selon un autre mode de réalisation, la composition comprend en outre de 10 à 220 pce d'agent plastifiant choisi parmi les résines plastifiantes présentant une température de transition vitreuse supérieure à 20°C, les plastifiants liquides à température ambiante et leurs mélanges.

Préférentiellement, dans la composition telle que définie ci-dessus, le système de réticulation chimique est un système de vulcanisation qui comprend du soufre, de 0 à 1 pce de zinc et de 0 à 1 pce d'acide gras, notamment un acide gras comprenant de 16 à 20 atomes de carbone, tel que par exemple l'acide stéarique.

Préférentiellement, dans la composition telle que définie ci-dessus, le système de réticulation chimique est un système de vulcanisation qui comprend du soufre, entre 0 et 0,5 pce de zinc et entre 0 et 0,5 pce d'acide gras, notamment un acide gras comprenant de 16 à 20 atomes de carbone, tel que par exemple l'acide stéarique.

Un autre objet de l'invention concerne un procédé pour préparer une composition de caoutchouc, notamment pour la fabrication de pneumatiques, caractérisé en ce qu'il comprend au moins les étapes suivantes :

- incorporer à ou aux élastomères diéniques, au cours d'une première étape, au moins une charge renforçante et au moins un agent de couplage, en malaxant thermo-mécaniquement le tout, en une ou plusieurs fois, jusqu'à atteindre une température maximale comprise entre 110°C et 190°C, ladite charge renforçante comprenant de la silice sous forme de nanoparticules essentiellement sphériques, la surface spécifique BET de cette silice allant de 30 $m^2/g$ à 250 $m^2/g$;
- incorporer ensuite, au cours d'une seconde étape, un système de réticulation et malaxer le tout jusqu'à une température maximale inférieure à 110°C, préférentiellement inférieure à 80°C.

L'invention concerne également un article semi-fini en caoutchouc pour pneumatique qui comprend au moins une composition de caoutchouc réticulable ou réticulée telle que définie ci-dessus ou susceptible d'être obtenue selon le procédé défini ci-dessus. De préférence, l'article semi-fini peut être une bande de roulement.
L'invention concerne aussi un pneumatique qui comporte au moins un article semi-fini tel que défini ci-dessus.

## I. MESURES ET TESTS UTILISES

### I.1 Caractérisation de la silice

*I.1.1. Mesure de la surface spécifique BET :*

La surface spécifique (« aire massique ») BET est déterminée par adsorption de gaz à l'aide de la méthode de Brunauer-Emmet-Teller décrite dans « The Journal of American Chemical Society» Vol. 60 page 309, février 1938), plus précisément selon la norme française NF ISO 9277 de décembre 1996 [méthode volumétrique multipoints (5 points) - gaz : azote - dégazage : 1 heure à 160°C - domaine de pression relative p/po : 0.05 à 0.17.

*I.1.2.* Mesure de l'indice de sphéricité et de la taille médiane des nanoparticules :

L'indice de sphéricité et la taille médiane des nanoparticules sont déterminés grâce à une méthode mettant en œuvre la microscopie électronique en mode transmission (MET).
L'indice de sphéricité est déterminé par le rapport entre la surface projetée (A) d'une nanoparticule de silice et la surface du disque (B) ayant la même circonférence que le périmètre projeté de ladite nanoparticule.

- Périmètre circonférentiel = $2\pi r$ = PM $\rightarrow$ r = $PM/2\pi$
- Surface correspondante = $\pi r^2$
- Surface recalculée (B) $\rightarrow$ $B = \pi (PM/2\pi)^2 = PM^2/4\pi$

L'indice de sphéricité est défini comme suit : $Is = A/B = 4\pi A/PM^2$
Cette définition est une adaptation surfacique (en projection) de l'indice de sphéricité telle que décrite dans l'article Waldell, Hakon « Volume, Shape and Roundness of Quartz particles » Journal of Geology, 43 (3) 250-280.
La taille médiane des nanoparticules correspond à la taille pour laquelle on a 50 % en masse des agrégats (nanoparticules) de taille inférieure à cette taille et 50 % en masse des agrégats (nanoparticules) de taille supérieure à cette taille.

*I.1.2.1. Préparation de l'échantillon:*

Les échantillons pour observation ont été préparés selon une méthode qui consiste à disperser de 2 à 10 mg de silice dans 5 à 50 ml d'eau ultrapure par sonification avec une sonde de puissance 600 W pendant environ 10 min. Une goutte de 1 à 10 µl de la suspension obtenue est déposée sur une grille Carbon/Formvar (Ted Pella N°01800-F, Support Films, 200Mesh Copper grids) qui a été préalablement hydrophobée. La goutte déposée est évaporée de son eau à l'air ambiant (température 23°C) pendant au moins 2 heures.

*I.1.2.2. Observation:*

Les observations ont été menées avec un microscope électronique en transmission en mode champ clair (TEM-BF) à une tension d'accélération des électrons de 200 kv. Les images ont été acquises à l'aide d'une caméra numérique à un grandissement donnant une largeur de champ de 4,495 µm sur une hauteur de 3,464 µm avec une taille de pixel de 1,4 nm. Environ 35 images ont été acquises dans ces conditions ce qui correspond à une superficie couverte de 545 $\mu m^2$.

*I.1.2.3. Analyse d'image:*

Afin d'extraire des données quantitatives des images, une analyse d'image a été menée avec le logiciel d'analyse CLEMEX Vision PE v7.0.553 (Clemex TechnologiesInc. - Quebec). Les 35 images ont été analysées à l'aide de la routine suivante :

"FIELD

- 001 Load Image '*.tif' with Bitplanes
- File: *.tif
- Use Default Calibration:If Required
- 002 Median x2
- 003 Sharpen High
- 004 Median x2
- 005 Gray Threshold
- BPL1 range 0..170
- Pause On All Fields
- 006 Opening CIRC x3 => BPL1 Extend
- 007 Separate CIRC => BPL1
- 008 Object Transfer BPL1 -> BPL2
- Sphericity less than 0,8
- 009 Object Transfer BPL1 -> BPL3
- Circular Diameter less than 0,025μm
- 010 Border Transfer BPL1 (All) -> Recycle bin
- 012 Object Measures (BPL1) -> OBJM2
- 1Aspect Ratio
- 1Roundness
- 1Sphericity
- 1Fractal Dimension
- 1Perimeter
- 1Circular Diameter"

En dehors des étapes classiques d'analyse d'image par réduction du bruit (médian) et rehaussement du contraste (sharpen), cette routine ne s'intéresse qu'aux nanoparticules en :

- Utilisant un algorithme de séparation (separate CIRC)
- Faisant un tri sur les objets les plus sphériques (indice de sphéricité > 0.8 retenus)
- Faisant un tri sur les tailles d'objets (diamètre circulaire > 25nm retenus)
- Faisant un tri sur les objets qui touchent les bords de l'image en les éliminant.

L'analyse est, dans ces conditions, conduite sur un nombre d'objets supérieur à 10000. Le logiciel extrait la distribution en taille d'objets, la taille médiane et l'indice de sphéricité en fonction de leur taille respective.

*<u>I.1.3. Nombre de groupe silanol par nm$^2$ :</u>*

Le nombre de groupe silanol par nm$^2$ est déterminé par greffage de méthanol sur la surface de la silice. Dans un premier temps, une quantité d'environ 1 g de silice brute est mise en suspension dans 10 ml de méthanol dans un autoclave de 110 ml.

Un barreau aimanté est introduit et le réacteur, fermé hermétiquement et calorifugé, est chauffé à 200°C (40 bars) sur agitateur magnétique chauffant pendant 4 heures. L'autoclave est ensuite refroidi dans un bain d'eau froide. La silice greffée est récupérée par décantation et le méthanol résiduel évaporé sous courant d'azote. Enfin, la silice greffée est séchée à 130°C sous vide pendant 12 heures. La teneur en carbone est déterminée par analyseur élémentaire (analyseur NCS 250 de CE Instruments) sur la silice brute et la silice greffée. Ce dosage de carbone sur la silice greffée doit être effectué dans les 3 jours qui suivent la fin du séchage. En effet, l'humidité de l'air ou la chaleur pourraient provoquer une hydrolyse du greffage méthanol.

Le nombre de groupe silanol par nm$^2$ est calculé à l'aide de la formule suivante

(I):

$$N_{SiOH/nm^2} = \frac{(\%C_g - \%C_b)*6{,}023*10^{23}}{S_{Spé}*10^{18}*12*100} \quad \text{(I)}$$

dans laquelle:

$N_{SiOH/nm2}$ représente le nombre de groupe silanol par $nm^2$ ($SiOH/nm^2$) ;
% Cg représente le pourcentage massique de carbone présent sur la silice greffée ;
% Cb représente le pourcentage massique de carbone sur la silice brute ; et
$S_{Spé}$ représente la surface spécifique BET de la silice en $m^2/g$.

*I.1.4. Dispersion :*

D'une manière connue, la dispersion de charge dans une matrice élastomérique peut être représentée par la note Z (aussi appelée note dispergrader), qui est mesurée, après réticulation, selon la méthode décrite par S. Otto et al. dans Kautschuk Gummi Kunststoffe, 58 Jahrgang, NR 7-8/2005, en accord avec la norme ISO 11345.

Le calcul de la note Z est basé sur le pourcentage de surface dans laquelle la charge n'est pas dispersée (« % surface non dispersée »), telle que mesurée par l'appareil « disperGRADER+ » fourni avec son mode opératoire et son logiciel d'exploitation « disperDATA » par la société Dynisco selon l'équation :

$$Z = 100 - (\%\ \text{surface non dispersée}) / 0{,}35$$

Le pourcentage de surface non dispersée est, quant à lui, mesuré grâce à une caméra observant la surface de l'échantillon sous une lumière incidente à 30°. Les points clairs sont associés à de la charge et à des agglomérats, tandis que les points foncés sont associés à la matrice de caoutchouc ; un traitement numérique transforme l'image en une image noir et blanche, et permet la détermination du pourcentage de surface non dispersée, telle que décrite par S. Otto dans le document précité.

Plus la note Z, exprimée en pourcentage, est haute, meilleure est la dispersion de la charge dans la matrice élastomérique (une note Z de 100% correspondant à une dispersion parfaite et une note Z de 0% à une dispersion médiocre). On considère qu'une note Z supérieure ou égale à 80% correspond à une très bonne dispersion de la charge dans la matrice élastomérique.

## 1.2 Caractérisation des compositions de caoutchouc

Les compositions de caoutchouc ont été réalisées comme décrit précédemment et sont caractérisées, avant et après cuisson, comme indiqué ci-dessous.

*I.2.1. Essais de traction :*

Ces essais de traction permettent de déterminer les contraintes d'élasticité et les propriétés à la rupture. Sauf indication différente, ils sont effectués conformément à la norme française NF ISO37 de décembre 2005.

Les contraintes à la rupture (en MPa) et les allongements à la rupture (en %) sont mesurés dans les conditions normales de température (23°C $\pm$ 2°C) et d'hygrométrie (50 $\pm$ 10% d'humidité relative). Un traitement des enregistrements de traction permet également de tracer la courbe de module en fonction de l'allongement.

*I.2.2. Propriétés dynamiques :*

La propriété dynamique tan($\delta$)max est mesurée sur un viscoanalyseur (Metravib V A4000), selon la norme ASTM D 5992 - 96. On enregistre la réponse d'un échantillon de composition vulcanisée (éprouvette cylindrique de 4 mm d'épaisseur et de 400 $mm^2$ de section), soumis à une sollicitation sinusoïdale en cisaillement simple alterné, à la fréquence de 10Hz, dans les conditions normales de température (23°C) selon la norme ASTM D 1349 - 99. On effectue un balayage en amplitude de déformation crête à crête de 0,1 à 50% (cycle aller), puis de 50% à 1 % (cycle retour). Le résultat exploité est le facteur de perte (tan $\delta$). Pour le cycle retour, on indique la valeur maximale de tan $\delta$ observée (tan($\delta$)max).

On enregistre également la réponse d'un échantillon de composition vulcanisée soumis à une sollicitation sinusoïdale en cisaillement simple alterné lors d'un balayage en température, soumis à une sollicitation sinusoïdale à contrainte imposée de 0,7 MPa et à une fréquence de 10 Hz, à une température de 60°C et on mesure le module complexe de cisaillement dynamique (G*) à 60°C.

*I.2.3. Temps de grillage :*

Les mesures sont effectuées à 130°C, conformément à la norme française NF T 43-005 de 1991. L'évolution de l'indice de consistométrique en fonction du temps de permet de déterminer le temps de grillage des compositions de caoutchouc, apprécié conformément à la norme précité par le paramètre T5 (cas d'un grand rotor), exprimé en minutes, et défini comme étant le temps nécessaire en minute pour obtenir une augmentation de l'indice consistométrie (exprimée en UM) de 5 unité au-dessus de la valeur minimale mesurée pour cet indice.

**1.3 Caractérisation des pneumatiques ou des bandes de roulement :**

*I.3.1. Résistance au roulement :*

La résistance au roulement est mesurée sur un volant, selon la méthode ISO 87-67 de 1992. Une valeur supérieure à celle du témoin, arbitrairement fixée à 100, indique un résultat amélioré c'est-à-dire une résistance au roulement plus basse.

*I.3.2. Résistance à l'usure :*

La méthode utilisée pour la mesure de la résistance à l'usure repose sur la comparaison des hauteurs de sculpture résiduelles entre un pneumatique témoin (pneumatique PT0) et un pneumatique conforme à l'invention (pneumatique PC1) après un roulage de 4000 km avec sur route ouverte qui couvre à la fois cycle urbain et parcours sinueux. Une valeur supérieure à celle du témoin, arbitrairement fixée à 100, indique un résultat amélioré c'est-à-dire une meilleure résistance à l'usure.

*I.3.3. Adhérence sur sol sec : Freinage sur sol sec*

Les pneumatiques sont montés sur un véhicule automobile équipé d'un système de freinage ABS et on mesure la distance nécessaire pour passer de 100 km/h à 0 km/h lors d'un freinage brutal sur sol sec (béton bitumineux). Une valeur supérieure à celle du témoin arbitrairement fixée à 100, indique un résultat amélioré c'est-à-dire une distance de freinage plus courte, illustrant donc une meilleure adhérence.

**II. DESCRIPTION DES FIGURES**

La figure 1 représente une photographie de microscopie électronique en mode transmission (MET) d'une silice sous forme de nanoparticules essentiellement sphériques. L'échantillon est préparé selon le mode opératoire décrit au paragraphe I.1.2.1 et la photographie est obtenue selon le mode opératoire décrit aux paragraphes I.1.2.2. et I.1.2.3. L'échelle en $\mu$m est indiquée sur la figure 1.

**III. DESCRIPTION DETAILLEE DE L'INVENTION**

Les compositions de caoutchouc selon l'invention sont à base d'un ou plusieurs élastomère(s) diénique(s), d'au moins une charge renforçante, d'au moins un agent de couplage, d'au moins un système de réticulation chimique, dans laquelle la charge renforçante comprend de la silice sous forme de nanoparticules essentiellement sphériques, la surface spécifique BET de cette silice allant de 30 $m^2/g$ à 250 $m^2/g$.

Par expression « composition à base de », on entend une composition comportant le mélange et/ou le produit de réaction in situ des différents constituants utilisés, certains de ces constituants étant susceptibles de, ou destinés à réagir entre eux, aux moins en partie, lors des différentes phases de fabrication de la composition, ou lors de la cuisson ultérieure, modifiant la composition telle qu'elle est préparée au départ. Ainsi, les compositions telles que mises en œuvre pour l'invention peuvent être différentes à l'état non réticulé et à l'état réticulé.

Dans la présente description, sauf indication expresse différente, tous les pourcentages (%) indiqués sont des pourcentages en masse.

Par ailleurs, tout intervalle de valeurs désigné par l'expression « entre a et b » représente le domaine de valeurs allant de plus de « a » à moins de « b » (c'est-à-dire bornes a et b exclues) tandis que tout intervalle de valeurs désigné par l'expression « de a à b » signifie le domaine de valeurs allant de « a » jusqu'à « b » (c'est-à-dire incluant les bornes strictes a et b).

L'abréviation « pce » (usuellement « phr » en anglais pour « per hundred part of rubber ») signifie parties en poids pour cent parties d'élastomères (du total des élastomères si plusieurs élastomères sont présents) ou caoutchouc présents dans la composition de caoutchouc.

Par « majoritairement », « à titre majoritaire » ou « majoritaire », on entend au sens de la présente invention, que le composé est majoritaire parmi les composés du même type dans la composition, c'est-à-dire que c'est celui qui représente la plus grande quantité en masse ou en poids parmi les composés du même type. En d'autres termes, la masse de ce composé représente au moins 51 % de la masse totale des composés du même type dans la composition. A titre d'exemple, une charge renforçante dite majoritaire est la charge renforçante représentant la plus grande masse par rapport à la masse totale des charges renforçantes de la composition. En d'autres termes, la masse de cette charge renforçante représente au moins 51% de la masse totale des charges renforçantes dans la composition.

Par « acide gras », on entend au sens de la présente invention un acide carboxylique comportant une longue chaîne carbonée ; notamment saturée ou insaturée. Préférentiellement, l'acidc gras comprend de 14 à 28 atomes de carbone et est notamment saturé. Plus préférentiellement, l'acide gras comprend de 16 à 20 atomes de carbone ; plus préférentiellement encore, l'acide gras est l'acide stéarique.

Dans le cadre de l'invention, les composés, les réactifs et autres composants mentionnés dans la description, peuvent être d'origine fossile ou biosourcée. Dans ce dernier cas, ils peuvent être, partiellement ou totalement, issus de la biomasse ou obtenus à partir de matières premières renouvelables issues de la biomasse. Sont concernés notamment les monomères, les polymères, les plastifiants, les charges, etc.

## III.1. Elastomère

Les compositions selon l'invention comprennent un ou plusieurs élastomères diéniques.

Par élastomère (ou indistinctement caoutchouc) « diénique », qu'il soit naturel ou synthétique, doit être compris de manière connue un élastomère constitué au moins en partie (i.e., un homopolymère ou un copolymère) d'unités monomères diènes (monomères porteurs de deux doubles liaisons carbone-carbone, conjuguées ou non).

Les élastomères diéniques peuvent être classés dans deux catégories : « essentiellement insaturés » ou « essentiellement saturés ». On entend en général par « essentiellement insaturé », un élastomère diénique issu au moins en partie de monomères diènes conjugués, ayant un taux de motifs ou unités d'origine diénique (diènes conjugués) qui est supérieur à 15% (% en moles) ; c'est ainsi que des élastomères diéniques tels que les caoutchoucs butyle ou les copolymères de diènes et d'alpha-oléfines type EPDM n'entrent pas dans la définition précédente et peuvent être notamment qualifiés d'élastomères diéniques « essentiellement saturés » (taux de motifs d'origine diénique faible ou très faible, toujours inférieur à 15%). Dans la catégorie des élastomères diéniques "essentiellement insaturés", on entend en particulier par élastomère diénique « fortement insaturé » un élastomère diénique ayant un taux de motifs d'origine diénique (diènes conjugués) qui est supérieur à 50%.

Ces définitions étant données, on entend plus particulièrement par élastomère diénique susceptible d'être utilisé dans les compositions conformes à l'invention:

(a) tout homopolymère d'un monomère diène conjugué, notamment tout homopolymère obtenu par polymérisation d'un monomère diène conjugué ayant de 4 à 12 atomes de carbone;

(b) tout copolymère obtenu par copolymérisation d'un ou plusieurs diènes conjugués entre eux ou avec un ou plusieurs composés vinyle aromatique ayant de 8 à 20 atomes de carbone;

(c) un copolymère ternaire obtenu par copolymérisation d'éthylène, d'une $\alpha$-oléfine ayant 3 à 6 atomes de carbone avec un monomère diène non conjugué ayant de 6 à 12 atomes de carbone, comme par exemple les élastomères obtenus à partir d'éthylène, de propylène avec un monomère diène non conjugué du type précité tel que notamment l'hexadiène-1,4, l'éthylidène norbornène, le dicyclopentadiène;

(d) un copolymère d'isobutène et d'isoprène (caoutchouc butyle), ainsi que les versions halogénées, en particulier chlorées ou bromées, de ce type de copolymère.

Bien qu'elle s'applique à tout type d'élastomère diénique, l'homme du métier comprendra que la présente invention est de préférence mise en œuvre avec des élastomères diéniques essentiellement insaturés, en particulier du type (a) ou (b) ci-dessus.

A titre de diènes conjugués conviennent notamment le butadiène-1,3, le 2-méthyl-1,3-butadiène, les 2,3-di(alkyle en $C_1$-$C_5$)-1,3-butadiènes tels que par exemple le 2,3-diméthyl-1,3-butadiène, le 2,3-diéthyl-1,3-butadiène, le 2-méthyl-3-éthyl-1,3-butadiène, le 2-méthyl-3-isopropyl-1,3-butadiène, un aryl-1,3-butadiène, le 1,3-pentadiène, le 2,4-hexadiène.

A titre de composés vinylaromatique conviennent par exemple le styrène, l'ortho-, méta-, para-méthylstyrène, le mélange commercial "vinyle-toluène", le para-tertiobutylstyrène, les méthoxystyrènes, les chlorostyrènes, le vinylmésitylène, le divinylbenzène, le vinylnaphtalène.

Les copolymères peuvent contenir entre 99% et 20% en poids d'unités diéniques et entre 1% et 80% en poids d'unités vinylaromatiques. Les élastomères peuvent avoir toute microstructure qui est fonction des conditions de polymérisation utilisées, notamment de la présence ou non d'un agent modifiant et/ou randomisant et des quantités d'agent

modifiant et/ou randomisant employées. Les élastomères peuvent être par exemple à blocs, statistiques, séquencés, microséquencés, et être préparés en dispersion ou en solution ; ils peuvent être couplés et/ou étoilés ou encore fonctionnalisés avec un agent de couplage et/ou d'étoilage ou de fonctionnalisation. Pour un couplage à du noir de carbone, on peut citer par exemple des groupes fonctionnels comprenant une liaison C-Sn ou des groupes fonctionnels aminés tels que aminobenzophénone par exemple. Pour un couplage à une charge inorganique renforçante telle qu'une silice, on peut citer par exemple des groupes fonctionnels silanol ou polysiloxane ayant une extrémité silanol (tels que décrits par exemple dans FR2740778 ou US6013718, et WO2008/141702), des groupes alkoxysilane (tels que décrits par exemple dans FR2765882 ou US5977238), des groupes carboxyliques (tels que décrits par exemple dans WO01/92402 ou US6815473, WO2004/096865 ou US2006/0089445) ou encore des groupes polyéthers (tels que décrits par exemple dans EP1127909 ou US6503973, WO2009/000750 et WO2009/000752). On peut aussi citer comme élastomères fonctionnels ceux préparés par l'utilisation d'un amorceur fonctionnel, notamment ceux portant une fonction amine ou étain (voir par exemple WO2010/072761). Comme autres exemples d'élastomères fonctionnalisés, on peut citer également des élastomères (tels que SBR, BR, NR ou IR) du type époxydés.

Ces élastomères fonctionnalisés peuvent être utilisés en coupage (mélange) entre eux ou avec des élastomères non fonctionnalisés. Par exemple, on peut utiliser un élastomère fonctionnalisé silanol ou polysiloxane ayant une extrémité silanol, en mélange avec un élastomère couplé et/ou étoilé à l'étain (décrit dans WO2011/042507), ce dernier représentant un taux compris de 5 à 50%, par exemple de 25 à 50%.

Conviennent les polybutadiènes et en particulier ceux ayant une teneur (% molaire) en unités -1,2 comprise entre 4% et 80% ou ceux ayant une teneur (% molaire) en cis-1,4 supérieure à 80%, les polyisoprènes, les copolymères de butadiène-styrène et en particulier ceux ayant une Tg (température de transition vitreuse (Tg, mesurée selon ASTM D3418) comprise entre 0°C et - 70°C et plus particulièrement entre - 10°C et - 60°C, une teneur en styrène comprise entre 5% et 60% en poids et plus particulièrement entre 20% et 50% en poids par rapport au poids du copolymère, une teneur (% molaire) en liaisons -1,2 de la partie butadiénique comprise entre 4% et 75%, une teneur (% molaire) en liaisons trans-1,4 de la partie butadiénique comprise entre 10% et 80%, les copolymères de butadiène-isoprène et notamment ceux ayant une teneur en isoprène comprise entre 5% et 90% en poids par rapport au poids du copolymère et une Tg allant de - 40°C à - 80°C, les copolymères isoprène-styrène et notamment ceux ayant une teneur en styrène comprise entre 5% et 50% en poids par rapport au poids du copolymère et une Tg comprise entre - 5 C et - 50°C. Dans le cas des copolymères de butadiène-styrène-isoprène conviennent notamment ceux ayant une teneur en styrène comprise entre 5% et 50% en poids et plus particulièrement comprise entre 10% et 40% par rapport au poids du copolymère, une teneur en isoprène comprise entre 15% et 60% en poids et plus particulièrement entre 20% et 50% par rapport au poids du copolymère, une teneur en butadiène comprise entre 5% et 50% en poids et plus particulièrement comprise entre 20% et 40% par rapport au poids du copolymère, une teneur (% molaire) en unités -1,2 de la partie butadiénique comprise entre 4% et 85%, une teneur (% molaire) en unités trans -1,4 de la partie butadiénique comprise entre 6% et 80%, une teneur (% molaire) en unités -1,2 plus -3,4 de la partie isoprénique comprise entre 5% et 70% et une teneur (% molaire) en unités trans -1,4 de la partie isoprénique comprise entre 10% et 50%, et plus généralement tout copolymère butadiène-styrène-isoprène ayant une Tg comprise entre - 5°C et - 70°C. La teneur en styrène, butadiène, isoprène en poids, la teneur molaire des unités -1,2 de la partie butadiénique, la teneur molaire des unités trans-1,4 de la partie butadiénique, la teneur molaire en unités -1,2 de la partie isoprénique, la teneur molaire des unités -3,4 de la partie isoprénique et la teneur en unités trans -1,4 de la partie isoprénique des copolymères sont mesurées par des techniques bien connues de l'homme du métier.

Selon un mode particulier de réalisation de l'invention, la composition de caoutchouc peut comprendre par exemple de 50 à 100 pce d'un premier élastomère diénique et de 0 à 50 pce d'un second élastomère diénique différent du premier élastomère diénique.

Le ou les élastomères diéniques de la composition selon l'invention peuvent être choisis préférentiellement dans le groupe des élastomères diéniques fortement insaturés constitué par les polybutadiènes (en abrégé « BR »), les polyisoprènes (en abrégé « IR ») de synthèse, le caoutchouc naturel (en abrégé « NR »), les copolymères de butadiène, les copolymères d'isoprène et les mélanges de ces élastomères. De tels copolymères sont plus préférentiellement choisis dans le groupe constitué par les copolymères de butadiène-styrène (en abrégé « SBR »), les copolymères d'isoprène-butadiène (en abrégé « BIR »), les copolymères d'isoprène-styrène (en abrégé « SIR »), les copolymères d'éthylène-butadiène et les copolymères d'isoprène-butadiène-styrène (en abrégé « SBIR »).

La composition selon l'invention peut contenir un seul élastomère diénique ou un mélange de plusieurs élastomères diéniques, le ou les élastomères diéniques pouvant être utilisés en association avec tout type d'élastomère synthétique autre que diénique, voire avec des polymères autres que des élastomères, par exemple des polymères thermoplastiques.

De préférence, la composition selon l'invention peut comprendre un seul élastomère choisi dans le groupe formé par les polybutadiènes, les polyisoprènes de synthèse, le caoutchouc naturel, les copolymères de butadiène-styrène, les copolymères d'isoprène-butadiène, les copolymères d'isoprène-styrène, les copolymères d'isoprène-butadiène-styrène, les copolymères d'éthylène-butadiène et les mélanges de ces élastomères, de préférence l'élastomère

est un copolymère de butadiène-styrène.

**III.2 Charge renforçante et agent de couplage**

On entend de manière connue par « charge renforçante », une charge connue pour ses capacités à renforcer une composition de caoutchouc utilisable pour la fabrication de pneumatiques.

On trouve parmi ces charges renforçantes des charges organiques, telles que le noir de carbone, et des charges inorganiques.

Par "charge inorganique renforçante", doit être entendu ici, de manière connue, toute charge inorganique ou minérale, quelles que soient sa couleur et son origine (naturelle ou de synthèse), encore appelée charge "blanche", charge "claire" ou encore charge "non-noire" ("*non-black filler*") par opposition au noir de carbone, cette charge inorganique étant capable de renforcer à elle seule, sans autre moyen qu'un agent de couplage intermédiaire, une composition de caoutchouc destinée à la fabrication d'un article semi-fini pour un pneumatique, en d'autres termes apte à remplacer, dans sa fonction de renforcement, un noir de carbone conventionnel de grade pneumatique pour un article semi-fini, notamment une bande de roulement. Une telle charge se caractérise généralement par la présence de groupes fonctionnels, notamment hydroxyle (-OH), à sa surface, nécessitant en cela l'emploi d'un agent ou système de couplage destiné à assurer une liaison chimique stable entre l'élastomère et ladite charge.

La composition selon l'invention comprend à titre de charge renforçante inorganique une silice sous forme de nanoparticules essentiellement sphériques, la surface spécifique BET de cette silice allant de 30 $m^2/g$ à 250 $m^2/g$.

Le terme « nanoparticules » utilisé dans la présente demande doit être compris dans son sens générique habituel d'agrégat de dimension nanométrique (encore appelé « particule secondaire ») et non dans celui de particules élémentaire (encore appelé « particule primaire »), éventuellement pouvant former, le cas échéant, une partie de cet agrégat. Par « agrégat », il faut entendre de manière connu l'ensemble insécable (i.e. qui ne peut être coupé, divisé, partagé) qui est produit lors de la synthèse de la charge, en général formé de particules élémentaires (primaires) agrées entre elles.

Les nanoparticules de silice utilisées dans les compositions de l'invention sont essentiellement sphériques. Par « essentiellement sphérique », on entend que les nanoparticules ressemblent à des sphères ou bien sont des sphères. On considère qu'une nanoparticule ressemble à une sphère dès lors qu'elle présente un indice de sphéricité supérieur ou égale à 0,80, de préférence allant de 0,80 à 0,99 ; de manière encore plus préférée allant de 0,85 à 0,99. L'indice de sphéricité est mesuré selon la méthode décrite au paragraphe I.1.2

Avantageusement, la silice sous forme de nanoparticules essentiellement sphériques peut avoir une surface spécifique BET allant de 30 $m^2/g$ à 150 $m^2/g$, de manière préférée va de 30 $m^2/g$ à 120 $m^2/g$, de manière encore plus préférée de 30 $m^2/g$ à 100 $m^2/g$. La surface spécifique BET est mesurée selon le protocole décrit au paragraphe I.1.1.

Les nanoparticules essentiellement sphériques sont des nanoparticules de silice amorphe. Ces nanoparticules sont denses, c'est-à-dire peu poreuses, voir non-poreuses. Comparées aux particules de silices obtenues par précipitation, les nanoparticules de silice utilisées dans les compositions de l'invention sont essentiellement sphériques. Elles sont notamment peu structurées.

La dispersion de la silice sous forme de nanoparticules essentiellement sphérique dans la matrice élastomérique est avantageusement comparable à celle obtenue pour les silices dite « hautement dispersible ». La dispersion de cette silice dans la matrice élastomérique de la composition de l'invention présente, en particulier, une note Z supérieure ou égale à 80. Cette note est mesurée selon la méthode décrite au paragraphe I.1.5.

Selon, un mode de réalisation, la taille médiane en masse ($d_{50}$) des nanoparticules essentiellement sphériques de silice peut être inférieure ou égale à 100 nm, de préférence elle va de 10 à 80 nm, de manière préférée de 20 à 70 nm. Cette taille médiane des nanoparticules correspond à la taille pour laquelle on a 50 % en masse des agrégats (nanoparticules) de taille inférieure à cette taille et 50 % en masse des agrégats (nanoparticules) de taille supérieure à cette taille. La taille médiane $d_{50}$ est mesurée selon la méthode décrite au paragraphe I.1.3.

Le nombre de groupe silanol par $nm^2$ ($N_{SiOH/nm2}$) de la silice sous forme de nanoparticules essentiellement sphériques peut être supérieur ou égal à 4, de préférence peut aller de 4 à 12, de manière plus préférée peut aller de 5 à 10. Le nombre de groupe silanols par $nm^2$ est mesuré selon la méthode décrite au paragraphe I.1.4.

La silice sous forme de nanoparticules essentiellement sphériques est bien connue de l'homme du métier et peut être obtenu notamment par des procédés tels que par exemple le procédé dit de Stoeber (W.Stoeber, A. Fink, E.Bohm, J.colloid Inter.Sci 26,62-69 (1968) ou bien par des procédés de fusion, notamment à l'arc électrique. La silice obtenue par des procédés de fusion à l'arc électrique est aussi appelée silice fondue (ou « fused silica » en anglais).

De préférence, la silice sous forme de nanoparticules essentiellement sphériques peut être une silice fondue.

La silice fondue (fused silica en anglais) est une silice amorphe synthétique, à ne pas confondre avec le quartz fondu (fused quartz en anglais) ou la silice vitreuse (vitrous silica en anglais), ni avec les silices pyrogénées. La silice vitreuse est obtenue en chauffant de la silice cristallisée au-dessus de son point de fusion et en la refroidissant rapidement pour éviter une recristallisation. Les silices pyrogénées sont obtenues en vaporisant de la silice à haute température en

présence d'un agent réducteur comme le charbon ou bien en brulant du tétrachlorure de silicium en présence de d'acide chlorhydrique et de méthane ou d'hydrogène. La silice fondue, quant à elle, est obtenue par arc électrique ou bien par fusion plasma c'est-à-dire en pulvérisation de poudre de silice amorphe de grande pureté à une température élevée d'au moins 1750°C en présence d'oxygène gazeux et d'air et en maintenant cette température au-dessus de la température de fusion de la silice de manière à ce que la silice fonde. La silice fondue est une silice d'une grande pureté qui peut comprendre plus de 99% en poids de deux éléments : Si et O. La silice fondue présente peu d'impuretés contrairement aux silices obtenues par pyrogénation. A titre d'exemple, pour une silice fondue, la teneur en ion ferreux $Fe^{2+}$ est inférieure à 20 ppm (ppm= partie par million), la teneur en ion chlorure $Cl^-$ est inférieure à 1 ppm ainsi que la teneur en ion sodium $Na^+$. L'homme du métier peut se référer au paragraphe « silice fondue » (ou « fused silica » en anglais) dans l'encyclopédie Kirk-Othmer « Encyclopedia of chemical technology fourth edition vol. 21 p1027-1028 » pour d'autres informations.

Les silices sous forme de nanoparticules essentiellement sphériques sont notamment disponibles commercialement par exemple chez le fournisseur Denki Kagaku Kogyo Kabushiki (DENKA). Par exemple, à titre de silice utilisée dans le cadre de l'invention conviennent notamment les silices UFP-40 et UFP-30 commercialisées par DENKA sous la forme d'une poudre « ultra-fine ».

Le taux de silice sous forme de nanoparticules essentiellement sphériques dans la composition de l'invention va de 60 à 250 pce, de préférence 80 à 200 pce. Il est entendu que l'homme du métier sait appliquer le taux de silice sous forme de nanoparticules essentiellement sphériques nécessaire en fonction des applications visées de la composition de caoutchouc.

Selon un mode de réalisation, la charge renforçante peut être constituée de silice sous forme de nanoparticules essentiellement sphériques.

Selon un autre mode de réalisation, la charge renforçante majoritaire peut être la silice sous forme de nanoparticules essentiellement sphériques, c'est-à-dire que le poids de ladite silice représente au moins 51 % du poids total de la charge renforçante. De manière préférée, le poids de cette silice peut représenter plus de 60 %, de préférence plus de 90% en poids du poids total de la charge renforçante ; le reste de la charge renforçante étant constituée de noir de carbone ou bien d'au moins une autre charge renforçante inorganique différente de la silice sous forme de nanoparticules essentiellement sphériques ou bien encore d'un mélange de noir de carbone et de ladite autre charge renforçante inorganique.

Préférentiellement lorsque la composition comprend un mélange de charges inorganiques renforçantes, l'autre charge inorganique renforçante peut être une charge du type siliceuse ou alumineuse, ou un mélange de ces deux types de charges.

L'autre charge inorganique renforçante de type siliceuse peut être toute silice renforçante connue de l'homme du métier, notamment toute silice précipitée ou pyrogénée, présentant une surface BET ainsi qu'une surface spécifique CTAB toutes deux inférieures à 450 $m^2/g$, de préférence de 30 à 400 $m^2/g$. Les silices précipitées hautement dispersibles (dites « HDS ») sont préférées, en particulier lorsque l'invention est mise en œuvre pour la fabrication de pneumatiques présentant une faible résistance au roulement; comme exemple de telles silices, on peut citer les silices Ultrasil 7000 de la société Evonik, les silices Zeosil 1165 MP, 1135 MP et 1115 MP de la société Solvay, la silice Hi-Sil EZ150G de la société PPG, les silices Zeopol 8715, 8745 ou 8755 de la Société Huber, les silices telles que décrites dans la demande WO 03/016837 précitée.

Une autre charge inorganique renforçante peut être une alumine ($Al_2O_3$) renforçante ; préférentiellement une alumine hautement dispersible ayant une surface BET allant de 30 à 400 $m^2/g$, plus préférentiellement entre 60 et 250 $m^2/g$, une taille moyenne de particules au plus égale à 500 nm, plus préférentiellement au plus égale à 200 nm. Comme exemples non limitatifs de telles alumines renforçantes, on peut citer notamment les alumines "Baikalox A125" ou "CR125" (société Baïkowski), "APA-100RDX" (Condéa), "Aluminoxid C" (Evonik) ou "AKP-G015" (Sumitomo Chemicals).

A titre d'autres exemples de charge inorganique susceptible d'être utilisée dans les compositions de caoutchouc de l'invention peuvent être encore cités des (oxyde-)hydroxydes d'aluminium, des aluminosilicates, des oxydes de titane, des carbures ou nitrures de silicium, tous du type renforçants tels que décrits par exemple dans les demandes WO 99/28376, WO 00/73372, WO 02/053634, WO 2004/003067, WO 2004/056915.

L'état physique sous lequel se présente l'autre charge inorganique renforçante est indifférent, que ce soit sous forme de poudre, de microperles, de granulés, de billes ou toute autre forme densifiée appropriée. Bien entendu on entend également par charge inorganique renforçante des mélanges de différentes charges inorganiques renforçantes, en particulier de charges siliceuses sous forme de nanoparticules essentiellement sphériques ou non et/ou alumineuses hautement dispersibles telles que décrites ci-dessus.

L'homme du métier comprendra qu'à titre de charge équivalente de la charge inorganique renforçante, autre que la silice sous forme de nanoparticules essentiellement sphériques, décrite dans le présent paragraphe, pourrait être utilisée une charge renforçante d'une autre nature, notamment organique, dès lors que cette charge renforçante serait recouverte d'une couche inorganique telle que silice, ou bien comporterait à sa surface des sites fonctionnels, notamment hydroxyles, nécessitant l'utilisation d'un agent de couplage pour établir la liaison entre la charge et l'élastomère.

Selon un mode de réalisation, la composition de l'invention peut comprendre en outre du noir de carbone.

Comme noirs de carbone conviennent tous les noirs de carbone, notamment les noirs du type HAF, ISAF, SAF conventionnellement utilisés dans les pneumatiques (noirs dits de grade pneumatique). Parmi ces derniers, on citera plus particulièrement les noirs de carbone renforçants des séries 100, 200 ou 300 (grades ASTM), comme par exemple les noirs N115, N134, N234, N326, N330, N339, N347, N375, ou encore, selon les applications visées, les noirs de séries plus élevées (par exemple N660, N683, N772). Les noirs de carbone pourraient être par exemple déjà incorporés à un élastomère isoprénique sous la forme d'un masterbatch (voir par exemple demandes WO 97/36724 ou WO 99/16600).

Comme exemples de charges organiques autres que des noirs de carbone, on peut citer les charges organiques de polyvinyle fonctionnalisé telles que décrites dans les demandes WO2006/069792, WO2006/069793, WO2008/003434 et WO2008/003435.

L'homme du métier saura adapter le taux de charge renforçante selon la nature de la charge inorganique ou organique utilisée et selon le type de pneumatique concerné, par exemple pneumatique pour moto, pour véhicule de tourisme ou encore pour véhicule utilitaire tel que camionnette ou poids lourd, etc.

De préférence, le taux total de charge(s) renforçante(s) peut aller de 60 à 300 pce, plus préférentiellement de 80 à 250 pce. Le taux total de charge(s) renforçante(s) correspond à la somme du taux de silice sous forme de nanoparticules essentiellement sphériques et des autres charges renforçantes organiques ou inorganiques lorsqu'elles sont présentes.

La composition de l'invention comprend au moins un agent de couplage qui permet de lier la charge inorganique renforçante à l'élastomère diénique.

On peut utiliser de manière connue un agent de couplage (ou agent de liaison) des organosilanes, notamment des alkoxysilanes polysulfurés ou des mercoptsilanes ou encore des polyorganosiloxanes au moins bifonctionnel. Ces agents de couplage sont destinés à assurer une connexion suffisante, de nature chimique et/ou physique, entre la charge inorganique (surface de ses particules) et l'élastomère diénique.

Les organosilanes peuvent être notamment des silanes polysulfurés, dits "symétriques" ou "asymétriques" selon leur structure particulière, tels que décrits par exemple dans les demandes WO03/002648 (ou US 2005/016651) et WO03/002649 (ou US 2005/016650).

Conviennent en particulier, sans que la définition ci-après soit limitative, des silanes polysulfurés dits "symétriques" répondant à la formule générale (II) suivante:

Z-A-Sx-A-Z (II)

dans laquelle:

- x est un entier de 2 à 8 (de préférence de 2 à 5) ;
- les symboles A, identiques ou différents, représente un radical hydrocarboné divalent (de préférence des groupements alkylène en $C_1$-$C_{18}$ ou des groupements arylène en $C_6$-$C_{12}$, plus particulièrement des alkylènes en $C_1$-$C_{10}$, notamment en $C_1$-$C_4$, en particulier le propylène) ;
- les symboles Z, identiques ou différents, répondent à l'une des formules ci-après: dans lesquelles:

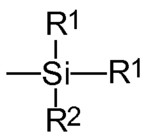 ; 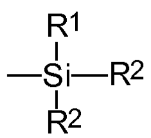 ; 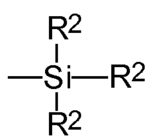 ,

- les radicaux $R^1$, substitués ou non substitués, identiques ou différents entre eux, représentent un alkyle en $C_1$-$C_{18}$, un cycloalkyle en $C_5$-$C_{18}$ ou un aryle en $C_6$-$C_{18}$ (de préférence un alkyle en $C_1$-$C_6$, un cyclohexyle ou un phényle, notamment un alkyle en $C_1$-$C_4$, plus particulièrement le méthyle et/ou l'éthyle).
- - les radicaux $R^2$, substitués ou non substitués, identiques ou différents entre eux, représentent un groupe alkoxyle en $C_1$-$C_{18}$ ou un cycloalkoxyle en $C_5$-$C_{18}$ (de préférence un groupe choisi parmi les alkoxyles en $C_1$-$C_5$ et les cycloalkoxyles en $C_5$-$C_8$, plus préférentiellement encore un groupe choisi parmi les alkoxyles en $C_1$-$C_4$, en particulier le méthoxyle et l'éthoxyle).

Dans le cas d'un mélange d'alkoxysilanes polysulfurés répondant à la formule (II) ci-dessus, notamment des mélanges usuels disponibles commercialement, la valeur moyenne des « x » est un nombre fractionnaire de préférence compris entre 2 et 5, plus préférentiellement proche de 4. Mais l'invention peut être aussi avantageusement mise en œuvre par exemple avec des alkoxysilanes disulfurés (x = 2).

A titre d'exemples de silanes polysulfurés, on citera plus particulièrement les polysulfures (notamment disulfurés, trisulfures ou tétrasulfures) de bis-(alkoxyl($C_1$-$C_4$)-alkyl($C_1$-$C_4$)silyl-alkyl($C_1$-$C_4$)), comme par exemple les polysulfures de bis(3-triméthoxysilylpropyl) ou de bis(3-triéthoxysilylpropyl). Parmi ces composés, on utilise en particulier le tétrasulfure de bis(3-triéthoxysilylpropyl), en abrégé TESPT, de formule $[(C_2H_5O)_3Si(CH_2)_3S_2]_2$ ou le disulfure de bis-(triéthoxysilylpropyle), en abrégé TESPD, de formule $[(C_2H_5O)_3Si(CH_2)_3S]_2$. On citera également à titre d'exemples préférentiels les polysulfures (notamment disulfurés, trisulfures ou tétrasulfures) de bis-(monoalkoxyl($C_1$-$C_4$)-dialkyl($C_1$-$C_4$)silylpropyl), plus particulièrement le tétrasulfure de bis-monoéthoxydiméthylsilylpropyl tel que décrit dans la demande de brevet WO 02/083782 (ou US 2004/132880).

A titre d'agent de couplage autre qu'alkoxysilane polysulfuré, on citera notamment des POS (polyorganosiloxanes) bifonctionnels ou encore des polysulfures d'hydroxysilane ($R^2$ = OH dans la formule II ci-dessus) tels que décrits dans les demandes de brevet WO02/30939 (ou US6,774,255) et WO02/31041 (ou US2004/051210), ou encore des silanes ou POS porteurs de groupements fonctionnels azo-dicarbonyle, tels que décrits par exemple dans les demandes de brevet WO2006/125532, WO2006/125533, WO 2006/125534.

A titre d'exemple d'autres silanes sulfurés, on peut citer par exemple les silanes porteurs d'au moins une fonction thiol (-SH) (dit mercaptosilanes) et/ou d'au moins une fonction thiol bloqués, tels que décrits par exemple dans les brevets ou les demandes de brevet US6 849 754, WO99/09036, WO2006/023815 et WO2007/098080.

Bien entendu pourraient être également utilisés des mélanges des agents de couplage précédemment décrits, comme par exemple les mélanges mentionnés dans la demande WO2006/125534 précitée.

La teneur en agent de couplage peut être avantageusement inférieure à 20 pce. Typiquement, le taux d'agent de couplage peut représenter de préférence de 0,3 à 15 pce Ce taux peut être aisément ajusté par l'homme du métier en fonction du taux de charge renforçante inorganique utilisé dans la composition.

La composition de caoutchouc selon l'invention peut également contenir, en complément des agents de couplage, des activateurs de couplage, des agents de recouvrement des charges ou plus généralement des agents d'aide à la mise en œuvre susceptibles de manière connue, grâce à une amélioration de la dispersion de la charge dans la matrice de caoutchouc et un abaissement de la viscosité de la composition, d'améliorer sa faculté de mise en œuvre à l'état cru, ces agents étant par exemple des silanes hydrolysables tels que des alkylalkoxysilanes, des polyols, des polyéthers, des amines primaires, secondaires ou tertiaires, des polyorganosiloxanes hydroxylés ou hydrolysables.

## III.3 Agent plastifiant

La composition selon l'invention peut comprendre en outre au moins un agent plastifiant. L'agent plastifiant peut être choisi parmi les résines plastifiantes présentant une température de transition vitreuse (Tg) supérieure à 20°C, les plastifiants liquides à température ambiante (23°C) et leurs mélanges. Par exemple, l'agent plastifiant peut être un système plastifiant composé d'au moins une résine plastifiante présentant une température de transition vitreuse (Tg) supérieure à 20°C et d'au moins un plastifiant liquide à température ambiante (23°C).

Le taux d'agent plastifiant dans la composition peut aller de 10 pce à 220 pce, de préférence peut aller de 20 à 180 pce.

### *III.3.1. Résine*

De manière connue de l'homme du métier, la dénomination « résine plastifiante » est réservée dans la présente demande, par définition, à un composé qui est d'une part solide à température ambiante (23°C) (par opposition à un composé plastifiant liquide tel qu'une huile), d'autre part compatible (c'est-à-dire miscible au taux utilisé, typiquement supérieur à 5 pce) avec la composition de caoutchouc à laquelle il est destiné, de manière à agir comme un véritable agent diluant.

Les résines hydrocarbonées sont des polymères bien connus de l'homme du métier, miscibles par nature dans les compositions d'élastomère(s) diénique(s) lorsqu'elles sont qualifiées en outre de « plastifiantes ». Elles ont été décrites par exemple dans l'ouvrage intitulé *"*Hydrocarbon Resins" de R. Mildenberg, M. Zander et G. Collin (New York, VCH, 1997, ISBN 3-527-28617-9) dont le chapitre 5 est consacré à leurs applications, notamment en caoutchouterie pneumatique (5.5. *"Rubber Tires and Mechanical Goods"*).

De préférence, la résine plastifiante hydrocarbonée présente au moins une quelconque des caractéristiques suivantes :

- une Tg supérieure à 20°C, plus préférentiellement supérieure à 30°C ;
- une masse moléculaire moyenne en nombre (Mn) comprise entre 400 et 2000 g/mol, plus préférentiellement entre 500 et 1500 g/mol ;
- un indice de polymolécularité (Ip) inférieur à 3, plus préférentiellement inférieur à 2 (rappel : Ip = Mw/Mn avec Mw masse moléculaire moyenne en poids).

Plus préférentiellement, cette résine plastifiante hydrocarbonée présente l'ensemble des caractéristiques préférentielles ci-dessus.

La température de transition vitreuse Tg est mesurée de manière connue par DSC (*Differential Scanning Calorimetry*), selon la norme ASTM D3418 (1999). La macrostructure (Mw, Mn et Ip) de la résine hydrocarbonée est déterminée par chromatographie d'exclusion stérique (SEC) : solvant tétrahydrofurane ; température 35°C ; concentration 1 g/l ; débit 1 ml/min ; solution filtrée sur filtre de porosité 0,45 $\mu$m avant injection ; étalonnage de Moore avec des étalons de polystyrène ; jeu de 3 colonnes "WATERS" en série ("STYRAGEL" HR4E, HR1 et HR0.5) ; détection par réfractomètre différentiel ("WATERS 2410") et son logiciel d'exploitation associé ("WATERS EMPOWER").

Les résines plastifiantes peuvent être aliphatiques, aromatiques ou encore du type aliphatiques/aromatiques c'est-à-dire à base de monomères aliphatiques et/ou aromatiques. Elles peuvent être naturelles ou synthétiques, à base ou non de pétrole (si tel est le cas, connues aussi sous le nom de résines de pétrole).

Selon un mode de réalisation particulièrement préférentiel, la résine plastifiante hydrocarbonée est choisie dans le groupe constitué par les résines d'homopolymère ou copolymère de cyclopentadiène (en abrégé CPD) ou dicyclopentadiène (en abrégé DCPD), les résines d'homopolymère ou copolymère terpène, les résines d'homopolymère ou copolymère terpène phénol, les résines d'homopolymère ou copolymère de coupe C5, les résines d'homopolymère ou copolymère de coupe C9 et les mélanges de ces résines, notamment le mélange de résines d'homopolymère ou copolymère de coupe C5 et de résines d'homopolymère ou copolymère de coupe C9.

Parmi les résines de copolymères ci-dessus sont préférentiellement utilisées celles choisies dans le groupe constitué par les résines de copolymère CPD/ vinylaromatique, les résines de copolymère DCPD/ vinylaromatique, les résines de copolymère CPD/ terpène, les résines de copolymère DCPD/ terpène, les résines de copolymère CPD/ coupe C5, les résines de copolymère DCPD/ coupe C5, les résines de copolymère terpène/ vinylaromatique, les résines de copolymère coupe C5/ vinylaromatique, et les mélanges de ces résines.

Le terme « terpène » regroupe ici de manière connue les monomères alpha-pinène, beta-pinène et limonène ; préférentiellement est utilisé un monomère limonène, composé se présentant de manière connue sous la forme de trois isomères possibles : le L-limonène (énantiomère lévogyre), le D-limonène (énantiomère dextrogyre), ou bien le dipentène, racémique des énantiomères dextrogyre et lévogyre.

A titre de monomère vinylaromatique conviennent par exemple le styrène, l'alpha-méthylstyrène, l'ortho-, méta-, para-méthylstyrène, le vinyle-toluène, le para-tertiobutylstyrène, les méthoxystyrènes, les chlorostyrènes, le vinylmésitylène, le divinylbenzène, le vinylnaphtalène, tout monomère vinylaromatique issu d'une coupe C9 (ou plus généralement d'une coupe C8 à C10). De préférence, le monomère vinylaromatique est du styrène ou un monomère vinylaromatique issu d'une coupe C9 (ou plus généralement d'une coupe C8 à C10). De préférence, le monomère vinylaromatique est le monomère minoritaire, exprimé en fraction molaire, dans le copolymère considéré.

Selon un mode de réalisation plus particulièrement préférentiel, la résine plastifiante hydrocarbonée est choisie dans le groupe constitué par les résines d'homopolymère CPD, résines d'homopolymère DCPD, les résines de copolymère CPD/ styrène, les résines de copolymère DCPD/ styrène, les résines de polylimonène, les résines de copolymère limonène/ styrène, les résines de copolymère limonène/ CPD, les résines de copolymère limonène/ DCPD, les résines de copolymère coupe C5/ styrène, les résines de copolymère coupe C5, les résines de copolymère coupe C9 et les mélanges de ces résines, notamment les mélanges de résines de copolymère coupe C5 et de résines de copolymère coupe C9.

Les résines préférentielles ci-dessus sont bien connues de l'homme du métier et disponibles commercialement, par exemple vendues en ce qui concerne les :

- résines polylimonène : par la société DRT sous la dénomination "Dercolyte L120" (Mn=625 g/mol ; Mw=1010 g/mol ; Ip=1,6 ; Tg=72°C) ou par la société ARIZONA sous la dénomination "Sylvagum TR7125C" (Mn=630 g/mol ; Mw=950 g/mol ; Ip=1,5 ; Tg=70°C) ;
- résines de copolymère coupe C5/ vinylaromatique, notamment coupe C5/ styrène ou coupe C5/ coupe C9 : par Neville Chemical Company sous les dénominations "Super Nevtac 78", "Super Nevtac 85" ou "Super Nevtac 99", par Goodyear Chemicals sous dénomination "Wingtack Extra", par Kolon sous dénominations "Hikorez T1095" et "Hikorez T1100", par Exxon sous dénominations "Escorez 2101" et "ECR 373" ;
- résines de copolymère limonène/ styrène : par DRT sous dénomination "Dercolyte TS 105" de la société DRT, par ARIZONA Chemical Company sous dénominations "ZT115LT" et "ZT5100".

*III.3.2. Agent plastifiant liquide à température ambiante*

L'agent plastifiant peut être un plastifiant liquide à température ambiante (23°C), par exemple une huile d'extension (ou huile plastifiante) liquide à température ambiante dont la fonction habituelle est de faciliter la mise en œuvre, par un abaissement de la plasticité Mooney et d'améliorer l'endurance par une diminution des modules d'allongement à cuit.

Toute huile d'extension, qu'elle soit de nature aromatique ou non-aromatique connue pour ses propriétés plastifiantes vis-à-vis d'élastomères diéniques peut être utilisée. A température ambiante (23°C), ces huiles, plus ou moins visqueuses, sont des liquides (c'est-à-dire, pour rappel, des substances ayant la capacité de prendre à terme la forme de leur contenant), par opposition notamment à des résines ou des caoutchoucs qui sont par nature solides. De préférence, l'huile plastifiante peut présenter la caractéristique suivante : sa température de transition vitreuse Tg est inférieur à 0°C, de préférence inférieure à -20°C. La température de transition vitreuse est mesurée selon la norme ASTM D3418 (1999).

De préférence, l'huile d'extension peut être choisie dans le groupe constitué par les huiles polyoléfiniques (c'est-à-dire issues de la polymérisation d'oléfines, monooléfines ou dioléfines), les huiles paraffiniques, les huiles naphténiques (à basse ou haute viscosité, notamment hydrogénée ou non), les huiles aromatiques, les huiles MES (Médium Extracted Solvates), les huiles TDAE (Treated Distillate Aromatic Extracts), les huiles minérales, les huiles végétales, les plastifiants éthers, les plastifiants esters, les plastifiants phosphates, les plastifiants sulfonates et les mélanges de ces composés. Par exemple, on peut citer ceux qui contiennent entre 12 et 30 atomes de carbone, par exemple le trioctyle phosphate. A titre d'exemples de plastifiants esters non aqueux et non hydrosolubles, on peut citer notamment les composés choisis dans le groupe constitué par les trimellitates, les pyromellitates, les phtalates, les 1,2-cyclohexane dicarboxylates, les adipates, les azélaates, les sébacates, les triesters de glycérol et les mélanges de ces composés. Parmi les triesters ci-dessus, on peut citer notamment des triesters de glycérol, de préférence constitués majoritairement (pour plus de 50 %, plus préférentiellement pour plus de 80 % en poids) d'un acide gras insaturé en C18, c'est-à-dire choisi dans le groupe constitué par l'acide oléique, l'acide linoléique, l'acide linolénique et les mélanges de ces acides. Plus préférentiellement, qu'il soit d'origine synthétique ou naturelle (cas par exemple d'huiles végétales de tournesol ou de colza), l'acide gras utilisé est constitué pour plus de 50% en poids, plus préférentiellement encore pour plus de 80% en poids d'acide oléique. De tels triesters (trioléates) à fort taux d'acide oléique sont bien connus, ils ont été décrits par exemple dans la demande WO02/088238, à titre d'agents plastifiants dans des bandes de roulement pour pneumatiques.

A titre préférentiel est utilisée une huile végétale choisie dans le groupe constituée par les huiles de lin, carthame, soja, maïs, coton, navette, ricin, abrasin, pin, tournesol, palme, olive, noix de coco, arachide, pépin de raisin, et les mélanges de ces huiles, en particulier une huile de tournesol. Cette huile végétale, particulièrement huile de tournesol, est plus préférentiellement une huile riche en acide oléique, c'est-à-dire que l'acide gras (ou l'ensemble des acides gras si plusieurs sont présents) dont elle dérive comporte de l'acide oléique selon une fraction massique au moins égale à 60%, plus préférentiellement au moins égale à 70%, en particulier égale ou supérieure à 80%.

Selon un mode de réalisation particulier de l'invention, le plastifiant liquide est une huile de pétrole, de préférence non aromatique, ou une huile végétale.

Un plastifiant liquide est qualifié de non aromatique dès lors qu'il présente une teneur en composés aromatiques polycycliques, déterminé avec l'extrait dans du DMSO selon la méthode IP346, de moins de 3%, par rapport au poids total du plastifiant liquide.

A ce titre, peut être utilisé un plastifiant liquide choisi dans le groupe constitué par les huiles MES, les Huiles TDAE, les huiles naphténiques (à basse ou haute viscosité, notamment hydrogénée ou non), les huiles paraffiniques et les mélanges de ces huiles.

*III.3.3. Mélange d'agents plastifiants*

Selon un mode de réalisation de l'invention, l'agent plastifiant peut être un au moins une résine plastifiante telle que mentionnée ci-dessus en mélange avec au moins un agent plastifiant liquide à température ambiante tel que décrit ci-dessus. On parlera alors de système plastifiant.

Selon un mode de réalisation, le système plastifiant peut comprendre selon un taux A allant de 5 à 120 pce, de préférence de 10 à 100 pce, de résine plastifiante telle que décrite ci-dessus et un taux B allant de 5 à 100 pce, de préférence de 10 à 80, d'agent plastifiant liquide à température ambiante tel que décrit ci-dessus.

Selon un mode de réalisation, le taux global (A+B) du système plastifiant peut aller de 10 à 220 pce dans la composition selon l'invention, de préférence de 20 à 180 pce.

De manière préférée, selon ce mode de réalisation, le système plastifiant peut comprendre :

- au moins une résine plastifiante choisie dans le groupe formée par les résines d'homopolymère CPD, résines d'homopolymère DCPD, les résines de copolymère CPD/ styrène, les résines de copolymère DCPD/ styrène, les résines de polylimonène, les résines de copolymère limonène/ styrène, les résines de copolymère limonène/ CPD, les résines de copolymère limonène/ DCPD, les résines de copolymère coupe C5/ styrène, les résines de copolymère coupe C5, les résines de copolymère coupe C9 et les mélanges de ces résines, notamment les mélanges de résines de copolymère coupe C5 et résines de copolymère coupe C9; et
- au moins un agent plastifiant liquide qui est une huile de pétrole et les huiles végétales, en particulier qui est choisi

dans le groupe constitué par les huiles végétales, les huiles MES, les Huiles TDAE, les huiles naphténiques (à basse ou haute viscosité, notamment hydrogénée ou non), les huiles paraffiniques et les mélanges de ces huiles.

### III.4 Système de réticulation

La composition selon l'invention comprend un système de réticulation chimique qui permet la formation de liaisons covalentes entre les chaînes d'élastomères. Le système de réticulation chimique peut être un système de vulcanisation ou un système à un ou plusieurs composés peroxydes.

Selon une première variante préférée, le système de réticulation est un système de vulcanisation, c'est-à-dire un système à base de soufre (ou d'un agent donneur de soufre) et d'un accélérateur primaire de vulcanisation. A ce système de vulcanisation de base viennent s'ajouter, incorporés au cours de la première phase non-productive et/ou au cours de la phase productive telles que décrites ultérieurement, divers accélérateurs secondaires ou activateurs de vulcanisation connus tels qu'oxyde de zinc, acide stéarique ou composés équivalents, dérivés guanidiques (en particulier diphénylguanidine).

De préférence, le système de vulcanisation comprend du soufre, du zinc, notamment sous forme d'oxyde de zinc, et au moins un acide gras, notamment un acide gras ayant de 16 à 20 atomes de carbone tel que l'acide stéarique.

Lorsque le soufre est utilisé, il est utilisé à un taux préférentiel compris entre 0,5 et 12 pce, en particulier entre 1 et 10 pce. L'accélérateur primaire de vulcanisation est utilisé à un taux préférentiel compris entre 0,5 et 10 pce, plus préférentiellement compris entre 0,5 et 5 pce.

Selon un mode de réalisation de l'invention, le système de réticulation chimique est un système de vulcanisation qui comprend du soufre, de 0 à 1 pce de zinc et de 0 à 1 pce d'acide gras, notamment un acide gras comprenant de 16 à 20 atomes de carbone, de préférence saturé, tel que par exemple l'acide stéarique.

Préférentiellement, dans la composition telle que définie ci-dessus, le système de réticulation chimique est un système de vulcanisation qui comprend du soufre, entre 0 et 0,5 pce de zinc et entre 0 et 0,5 pce d'acide gras, notamment un acide gras comprenant de 16 à 20 atomes de carbone, de préférence saturé, tel que par exemple l'acide stéarique.

On peut utiliser comme accélérateur (primaire ou secondaire) tout composé susceptible d'agir comme accélérateur de vulcanisation des élastomères diéniques en présence de soufre, notamment des accélérateurs du type thiazoles ainsi que leurs dérivés, des accélérateurs de types thiurames, dithiocarbamates de zinc. Ces accélérateurs sont par exemple choisis dans le groupe constitué par disulfure de 2-mercaptobenzothiazyle (en abrégé "MBTS"), disulfure de tetrabenzylthiurame ("TBZTD"), N-cyclohexyl-2-benzothiazyle sulfénamide ("CBS"), N,N-dicyclohexyl-2-benzothiazyle sulfénamide ("DCBS"), N-ter-butyl-2-benzothiazyle sulfénamide ("TBBS"), N-ter-butyl-2-benzothiazyle sulfénimide ("TBSI"), dibenzyldithiocarbamate de zinc ("ZBEC") et les mélanges de ces composés. De préférence, on utilise un accélérateur primaire du type sulfénamide.

Selon une deuxième variante, lorsque la réticulation chimique est effectuée au moyen d'un ou plusieurs composés peroxydes, le taux dudit ou desdits composés peroxydes peut aller de 0,01 à 10 pce. A titre de composés peroxydes utilisables comme système de réticulation chimique, on peut citer les acyl peroxydes, par exemple le benzoyl peroxyde ou le p-chlorobenzoyl peroxyde, les cétones peroxydes, par exemple le méthyl éthyl cétone peroxyde, les peroxyesters, par exemple le t-butylperoxyacétate, le t-butylperoxybenzoate et le t-butylperoxyphtalate, les alkyl peroxides, par exemple le dicumyl peroxyde, le di-t-butyl peroxybenzoate et le 1,3-bis(t-butyl peroxyisopropyl)benzène, les hydroperoxydes, par exemple le t-butyl hydroperoxyde).

### 111.5 Autre additif

Les compositions de caoutchouc des pneumatiques conformes à l'invention peuvent comporter optionnellement également tout ou partie des additifs usuels habituellement utilisés dans les compositions d'élastomères destinées à la fabrication de produits semi-fini et de pneumatiques, comme par exemple des pigments, des agents de protection tels que cires anti-ozone, anti-ozonants chimiques, anti-oxydants, des agents anti-fatigue, des agents de réticulation autres que ceux précités, des résines renforçantes, des accepteurs (par exemple résine phénolique novolaque) ou des donneurs de méthylène (par exemple HMT ou H3M) tels que décrits par exemple dans la demande WO 02/10269.

Bien entendu, les compositions conformes à l'invention peuvent être utilisées seules ou en coupage (i.e. mélange) avec toute autre composition de caoutchouc utilisable pour la fabrication de produits semi-finis et de pneumatiques.

Il va de soi que l'invention concerne les compositions de caoutchouc précédemment décrites tant à l'état « cru » ou non réticulée (i.e. avant cuisson) qu'à l'état dit « cuit » ou réticulé, ou encore vulcanisé (i.e. après réticulation ou vulcanisation).

Les compositions de l'invention sont bien adaptées pour la fabrication de produits semi-finis et finis pour des pneumatiques, notamment pour des pneumatiques destinés à équiper les véhicules sans moteur tels que les bicyclettes, les véhicules à moteur de type tourisme, les SUV (Sport Utility Vehicles), les deux roues (notamment les motos), les avions, les véhicules industriels choisis parmi les camionnettes, les poids-lourds (c'est-à-dire le métro, les bus, les engin

routiers (camions et remorques)), les véhicules hors la route, tels que les engins agricoles ou de génie civil, les autres véhicules de transports ou de manutention.

## 111.6 Préparation des compositions

Les compositions de caoutchouc de l'invention peuvent être fabriquées dans des mélangeurs appropriés, en utilisant deux phases de préparation successives selon une procédure générale bien connue de l'homme du métier : une première phase de travail ou malaxage thermomécanique (parfois qualifiée de phase « non-productive ») à haute température, jusqu'à une température maximale comprise entre 130°C et 200°C, de préférence entre 145°C et 185°C, suivie d'une seconde phase de travail mécanique (parfois qualifiée phase dite « productive ») à plus basse température, typiquement inférieure à 120°C, par exemple entre 60°C et 100°C, phase de finition au cours de laquelle est incorporé le système de réticulation ou de vulcanisation, de telles phases ont été décrites par exemple dans les demandes EP 0501227, EP 0735088 et EP 0810258.

La première phase (non-productive) est conduite préférentiellement en plusieurs étapes thermomécaniques. Au cours d'une première étape on introduit, dans un mélangeur approprié tel qu'un mélangeur interne usuel, le ou les élastomère(s), le ou les charge(s) renforçante(s) en une ou plusieurs portions successives dont notamment la silice sous forme de nanoparticules essentiellement sphériques et ayant une surface spécifique BET allant de 30 $m^2/g$ à 250 $m^2/g$, la combinaison de plastifiants (et éventuellement les agents de couplage et/ou d'autres ingrédients à l'exception du système de vulcanisation), à une température comprise entre 20°C et 100°C et, de préférence, entre 25°C et 100°C. Après quelques minutes, préférentiellement de 0,5 à 2 min et une montée de la température à 90°C à 100°C, les autres ingrédients (c'est-à-dire, ceux qui restent si tous n'ont pas été mis au départ) sont ajoutés en une fois ou par parties, à l'exception du système de vulcanisation durant un mélangeage allant de 20 secondes à quelques minutes. La durée totale du malaxage, dans cette phase non-productive, est de préférence comprise entre 2 et 10 minutes à une température inférieure ou égale à 180°C, et préférentiellement inférieure ou égale à 170°C.

Après refroidissement du mélange ainsi obtenu, on incorpore alors le système de vulcanisation à basse température (typiquement inférieure à 100°C), généralement dans un mélangeur externe tel qu'un mélangeur à cylindres; le tout est alors mélangé (phase productive) pendant quelques minutes, par exemple entre 5 et 15 min.

La composition finale ainsi obtenue est ensuite calandrée, par exemple sous la forme d'une feuille ou d'une plaque, notamment pour une caractérisation au laboratoire, ou encore extrudée, pour former par exemple un profilé de caoutchouc utilisé pour la fabrication de semi-finis afin d'obtenir des produits tels qu'une bande de roulement. Ces produits peuvent ensuite être utilisés pour la fabrication de pneumatiques, selon les techniques connues de l'homme du métier.

Les caractéristiques préférées de la silice sous forme de nanoparticules essentiellement sphériques s'appliquent au procédé décrit ci-dessus.

En particulier, la surface spécifique BET de cette silice peut aller de 30 à 150 $m^2/g$, de manière encore plus préférée de 30 à 120 $m^2/g$, mieux de 30 à 100 $m^2/g$.

Préférentiellement, la silice sous forme de nanoparticules essentiellement sphériques présente un nombre de groupe silanol par $nm^2$ supérieur ou égal à 4, de préférence allant de 4 à 12, de manière plus préférée allant de 5 à 10.

Préférentiellement, la silice sous forme de nanoparticules essentiellement sphériques présente un indice de sphéricité supérieur ou égal à 0,80, de préférence allant de 0,80 à 0,99, de manière plus préférée allant de 0,85 à 0,99.

Préférentiellement, la silice sous forme de nanoparticules essentiellement sphériques peut être une silice fondue.

Préférentiellement, le taux de silice sous forme de nanoparticules essentiellement sphériques peut aller de 60 à 250 pce, de préférence 80 à 200 pce.

Préférentiellement, la taille médiane des nanoparticules essentiellement sphérique de silice peut être inférieure ou égale à 100 nm, de préférence elle peut aller de 10 à 80 nm, de manière encore plus préférée peut aller de 20 à 70 nm.

La vulcanisation (ou cuisson) est conduite de manière connue à une température généralement comprise entre 130°C et 200°C, sous pression, pendant un temps suffisant qui peut varier par exemple entre 5 et 90 min en fonction notamment de la température de cuisson, du système de vulcanisation adopté, de la cinétique de vulcanisation de la composition considérée ou encore de la taille du pneumatique.

Préférentiellement, le système de vulcanisation comprend du soufre, du zinc, notamment sous forme d'oxyde de zinc, et au moins un acide gras, notamment un acide gras ayant de 16 à 20 atomes de carbone, de préférence saturé, tel que l'acide stéarique.

Lorsque le soufre est utilisé, il est utilisé à un taux préférentiel compris entre 0,5 et 12 pce, en particulier entre 1 et 10 pce. L'accélérateur primaire de vulcanisation est utilisé à un taux préférentiel compris entre 0,5 et 10 pce, plus préférentiellement compris entre 0,5 et 5 pce.

Selon un mode de réalisation du procédé, le système de réticulation chimique est un système de vulcanisation qui comprend du soufre, de 0 à 1 pce de zinc et de 0 à 1 pce d'acide gras, notamment un acide gras comprenant de

16 à 20 atomes de carbone, de préférence saturé, tel que par exemple l'acide stéarique.

Préférentiellement, dans le procédé tel que défini ci-dessus, le système de réticulation chimique est un système de vulcanisation qui comprend du soufre, entre 0 et 0,5 pce de zinc et entre 0 et 0,5 pce d'acide gras, notamment un acide gras comprenant de 16 à 20 atomes de carbone, de préférence saturé, tel que par exemple l'acide stéarique.

## III.7 Article semi-fini et pneumatique

Un autre objet de la présente invention concerne un article semi-fini comprenant au moins une composition de caoutchouc réticulable ou réticulé telle que définie ci-dessus ou susceptible d'être obtenue par le procédé décrit ci-dessus. Un produit semi-fini est un produit en caoutchouc destinés à la fabrication de pneumatique. Ce peut être tout type bande de gommes, telle que notamment des bandes de roulement, des nappes d'armature de sommet (par exemple des nappes de travail, des nappes de protection ou des nappes de frettage), de nappes d'armature de carcasse, des nappes de flancs, des nappes de bourrelets, des nappes de protecteurs, des nappes de sous-couches, des nappes de blocs de caoutchouc et autres nappes assurant l'interface entre les zones précitées des pneumatiques. De préférence, l'article semi-fini est une bande de roulement.

L'invention a également pour objet un pneumatique comprenant au moins un article semi-fini tel que mentionné ci-dessus.

Les exemples qui suivent illustrent l'invention sans toutefois la limiter.

## IV. EXEMPLES DE REALISATION DE L'INVENTION

On procède pour les essais qui suivent à la fabrication de compositions de la manière suivante: on introduit en une ou plusieurs portions successives dans un mélangeur interne, rempli à 70% et dont la température initiale de cuve est d'environ 50°C, l'élastomère diénique (copolymère SBR), la charge renforçante (silice à tester), l'agent de couplage et les agents plastifiants, puis, après une à deux minutes de malaxage, les divers autres ingrédients à l'exception du système de vulcanisation. On conduit alors un travail thermomécanique (phase non-productive) en une étape (durée totale du malaxage égale à environ 10 min), jusqu'à atteindre une température maximale de « tombée » d'environ 165°C.

On récupère le mélange ainsi obtenu, on le refroidit puis on ajoute le système de vulcanisation (soufre et accélérateur) sur un mélangeur externe (homofinisseur) à environ 70°C, en mélangeant le tout (phase productive) pendant environ 5 à 10 min.

Les compositions ainsi obtenues sont ensuite calandrées soit sous la forme de plaques (épaisseur de 2 à 3 mm) ou de feuilles fines de caoutchouc pour la mesure de leurs propriétés physiques ou mécaniques après cuisson, soit sous la forme de profilés utilisables directement, après découpage et/ou assemblage aux dimensions souhaitées, par exemple comme produits semi-finis pour pneumatiques, en particulier comme bandes de roulement de pneumatiques.

- Essai 1

L'essai suivant a pour but de démontrer les propriétés améliorées d'une composition de caoutchouc conforme à l'invention comparées à des compositions non conformes ne comprenant pas de silice sous forme de nanoparticules essentiellement sphériques à titre de charge renforçante.

Pour cela, on compare trois compositions comprenant un élastomère diénique (copolymère SBR), un agent de couplage et un système de vulcanisation, chacune des compositions étant renforcée par une silice différente dont les caractéristiques sont précisées ci-après.

Composition T1 : composition témoin dont la charge renforçante est une silice obtenue par précipitation. Elle est non sphérique et a une surface spécifique BET égale à 35 $m^2/g$.

Composition T2 : composition témoin dont la charge renforçante est une silice obtenue par pyrogénation. Elle est essentiellement sphérique et a une surface spécifique BET égale à 20 $m^2/g$.

Composition C1 : composition selon l'invention dont la charge renforçante est une silice sous forme de nanoparticules essentiellement sphériques. Elle a une surface spécifique BET égale à 40 $m^2/g$.

Les formulations des différentes compositions sont données dans le tableau 1. Les quantités sont exprimées en parties pour 100 parties en poids d'élastomères (pce.)

Le taux d'agent de couplage et le taux de diphénylguanidine sont adaptés en fonction de la nature de la silice. En effet, plus la surface spécifique d'une silice est importante, plus le nombre de sites de liaison potentiels entre la charge renforçante et l'élastomère est important ; et donc plus la quantité d'agent de couplage devra être importante pour favoriser les liaisons charge renforçante / élastomère. L'homme du métier sait donc adapter ces taux en fonction de la nature de la charge renforçante utilisée.

La fraction volumique de charge est identique pour l'ensemble des compositions.

La caractérisation des silices a été effectuée selon les méthodes décrites aux paragraphes I.1.

Tableau 1: Compositions

| Composition | T1 | T2 | C1 |
|---|---|---|---|
| SBR1 (a) | 100 | 100 | 100 |
| Silice (b) | 100 | - | - |
| Silice (c) | - | 100 | - |
| Silice (d) | - | - | 100 |
| Agent de couplage (e) | 2 | 1 | 2 |
| Plastifiant liquide (f) | - | - | - |
| Plastifiant résine (g) | 45 | 45 | 45 |
| DPG | 0,4 | 0,2 | 0,4 |
| Noir | 5 | 5 | 5 |
| Oxyde de zinc | 3 | 3 | 3 |
| Acide stéarique | 2,5 | 2,5 | 2,5 |
| Antioxydant (h) | 2 | 2 | 2 |
| Accélérateur (i) | 2,5 | 2,5 | 2,5 |
| Soufre | 1 | 1 | 1 |
| | | | |
| *Fraction volumique de charge* | *23%* | *23%* | *23%* |

(a) SBR avec 15% de motif styrène ; 24 % de motif butadiène -1,2 ; 30% de motif butadiène cis-1,4 ; 46% de motif butadiène trans-1,4 ; ce SBR a une température de transition vitreuse Tg égale à -65°C (Tg, mesurée selon ASTM D3418);
(b) Silice «Ultrasil 880 » de la société Evonik ayant surface spécifique BET 35$m^2$/g. C'est une silice précipitée. Son indice de sphéricité est inférieur à 0,5.
(c) Silice Sidistar R300 de la société Elkem ayant surface spécifique BET 20$m^2$/g. C'est une silice pyrogénée. Son indice de sphéricité est supérieur à 0,8.
(d) Silice «UFP-40» de la société Denki Kagaku Kogyo Kabushiki (DENKA) ayant une surface spécifique BET 40 $m^2$/g, une taille médiane des nanoparticules de 60 nm, un nombre de groupe silanol par $nm^2$ égal à 8 et un indice de sphéricité de 0,92. C'est une silice fondue.
(e) Silane TESPT « SI69 » de la société Evonik ;
(f) Huile TDAE « Flexon 630 » de la société Shell ;
(g) Résine « Escorez 2173 » de la société Exxon ; Cette résine a une Tg de 42°C, (Tg, mesurée selon ASTM D3418) ;
(h) Antioxydant « Santoflex 6PPD » de la société Solutia ;
(i) Accélérateur « Santocure CBS » de la société Solutia ;

Les propriétés mesurées après une cuisson à 150°C pendant 40 min sont données dans le tableau 2 qui suit.

Tableau 2: Résultats

| Composition | T1 | T2 | C1 |
|---|---|---|---|
| Note Z (Note dispergrader) (%) | 60 | 61 | 81 |
| Elongation rupture (%) | 850 | 700 | 950 |
| Contrainte rupture (MPa) | 11 | 12 | 22 |
| Hystérèse (Tan$\delta$ max (8% déf)) | 0,12 | 0,12 | 0,12 |

De manière inattendue, la composition C1 selon l'invention a une note Z supérieure à celle des compositions T1 et T2. Ceci indique que la silice sous forme de nanoparticules essentiellement sphériques se disperse dans la matrice

élastomérique beaucoup mieux que les deux autres silices testées.

Par ailleurs, on note, de manière surprenante, que pour des propriétés d'hystérèse identiques, la composition C1 selon l'invention présente des propriétés à la rupture très significativement améliorées par rapport aux compositions T1 et T2. En effet, la composition C1 selon l'invention présente une contrainte à la rupture deux fois plus élevée que celles des compositions T1 et T2 tout en ayant également une élongation à la rupture supérieure à celle mesurée pour les compositions Tl et T2.

• Essai 2

Cet essai a pour but de démontrer les propriétés améliorées d'une composition de caoutchouc conforme à l'invention comparées à une composition représentative d'une formulation utilisée pour la fabrication d'une bande de roulement destinée à conférer au pneumatique qu'il la comporte une excellente adhérence et résistance au roulement.

Pour cela, on compare la composition C1 selon l'invention à une composition témoin T0 comprenant un élastomère diénique (copolymère SBR), un agent de couplage, un système de vulcanisation et une charge renforçante qui est une silice obtenue par précipitation. Cette silice est non sphérique et a une surface spécifique BET égale à 160m$^2$/g. Elle est qualifiée de silice hautement dispersible. La composition T0 témoin est une composition connue pour représenter un bon compromis de propriétés - résistance au roulement / usure - tout en ayant de très bonnes propriétés d'adhérence.

Les formulations des différentes compositions sont données dans le tableau 3. Les quantités sont exprimées en parties pour 100 parties en poids d'élastomères (pce).

La caractérisation des silices a été effectuée selon les méthodes décrites aux paragraphes I.1.

Tableau 3 : Compositions

| **Composition** | **T0** | **C1** |
|---|---|---|
| SBR1 (a) | 100 | 100 |
| Silice (j) | 142 | - |
| Silice (d) | - | 100 |
| Agent de couplage (e) | 11,5 | 2 |
| Plastifiant liquide (f) | 30 | - |
| Plastifiant résine (g) | 85 | 45 |
| DPG | 2,3 | 0.4 |
| Noir de carbone | 5 | 5 |
| Oxyde de zinc | 3 | 3 |
| Acide stéarique | 2,5 | 2,5 |
| Antioxydant (h) | 2 | 2 |
| Accélérateur (i) | 2,5 | 2,5 |
| Soufre | 1 | 1 |
| | | |

(suite)

| Composition | T0 | C1 |
|---|---|---|
| *Fraction volumique de charge* | *23* | *23* |
| (a) SBR avec 15% de motif styrène ; 24 % de motif butadiène -1,2 ; 30% de motif butadiène cis-1,4 ; 46% de motif butadiène trans-1,4 ; ce SBR a une température de transition vitreuse Tg égale à -65°C (Tg, mesurée selon ASTM D3418);<br>(j) Silice «Zeosil1165MP» de la société Solvay ayant une surface spécifique BET 160 $m^2/g$. C'est une silice précipitée. Son indice de sphéricité est inférieur à 0,5.<br>(d) Silice «UFP-40» de la société Denki Kagaku Kogyo Kabushiki (DENKA) ayant une surface spécifique BET 40 $m^2/g$, une taille médiane des nanoparticules de 60 nm, un nombre de groupe silanol par $nm^2$ est égal à 8 et un indice de sphéricité de 0,92. C'est une silice fondue.<br>(e) Silane TESPT « SI69 » de la société Evonik ;<br>(f) Huile TDAE « Flexon 630 » de la société Shell ;<br>(g) Résine « Escorez 2173 » de la société Exxon ; Cette résine a une Tg de 42°C, (Tg, mesurée selon ASTM D3418) ;<br>(h) Antioxydant « Santoflex 6PPD » de la société Solutia ;<br>(i) Accélérateur « Santocure CBS » de la société Solutia ; | | |

Les propriétés mesurées après une cuisson à 150°C pendant 40 min sont données dans le tableau 4 qui suit.

Tableau 4 : Résultats

| Composition | T0 | C1 |
|---|---|---|
| Note Z (Note dispergrader) (%) | 86 | 81 |
| Elongation rupture (%) | 700 | 950 |
| Contrainte rupture (MPa) | 13 | 22 |
| Module G*à 60°C (MPa) | 0,6 | 0,6 |
| Hystérèse (Tan$\delta$ max (8% déf)) | 0,3 | 0,12 |

La comparaison s'effectue à iso-fraction volumique de charge de manière à pouvoir déterminer l'impact de la charge testée sur les propriétés de la composition de caoutchouc. Les taux d'agent de couplage et de diphénylguanidine (DPG) sont adaptés en fonction de la nature de la silice.

Bien que les compositions T0 et C1 se distinguent par plusieurs paramètres (nature de la silice, quantité de silice, de diluants et d'agent de couplage), il est intéressant de pourvoir comparer la composition conforme à l'invention à base de silice sous forme de nanoparticules essentiellement sphériques à une composition connue pour représenter un bon compromis de propriétés - résistance au roulement / usure - tout en ayant de très bonnes propriétés d'adhérence et de constater que la composition conforme à l'invention peut être meilleure que cette composition connue.

La composition C1 selon l'invention présente la même rigidité que la composition T0 utilisée comme représentative d'une bande de roulement conférant de bonnes propriétés d'adhérence et de résistance au roulement au pneumatique qui la comporte. Les propriétés mécaniques de la composition C1, traduites par une rigidité équivalente à celle de la composition T0, sont un indice favorable en matière de bonnes propriétés d'adhérence d'un pneumatique muni d'une bande de roulement comprenant la composition C1.

De manière totalement surprenante, on constate que la composition C1 selon l'invention présente une note Z équivalente à celle de la composition T0. La silice sous forme de nanoparticules essentiellement sphériques utilisée dans la composition C1 se disperse dans la matrice élastomérique d'une manière équivalente à une silice dite « hautement dispersible ».

Par ailleurs, l'observation du tableau 4 montre également de façon surprenante que la composition C1 selon l'invention présente des propriétés à la rupture et des propriétés d'hystérèse très significativement améliorées par rapport à la composition T0. L'amélioration des propriétés hystérétiques et des propriétés à la rupture est favorable pour diminuer la résistance au roulement d'un pneumatique muni d'une bande de roulement comprenant une composition C1.

En résumé, l'utilisation d'une silice sous forme de nanoparticules essentiellement sphériques et ayant une surface spécifique BET supérieure à 30 $m^2/g$ comme charge renforçante dans une composition de caoutchouc pour pneumatiques permet étonnamment d'améliorer significativement les propriétés à la rupture par rapport à des compositions utilisant un autre type de charge renforçante.

Par rapport à une composition représentative utilisée pour la fabrication d'une bande de roulement qui présente une très bonne adhérence et résistance au roulement, l'utilisation de silice sous forme de nanoparticules essentiellement sphériques et ayant une surface spécifique BET supérieure à 30 $m^2/g$ permet en outre d'améliorer encore plus la résistance au roulement et les propriétés à la rupture sans pénaliser l'adhérence. Ce résultat est totalement surprenant.

• Essai 3

Cet essai a pour but de démontrer l'avantage, sur le phénomène de grillage, des compositions de l'invention présentant de faibles taux d'oxyde de zinc et d'acide stéarique par rapport à des compositions témoins dans lesquelles on diminue également les taux d'oxyde de zinc et d'acide stéarique.

Pour cela, on compare les compositions conformes à l'invention C4 à C9 aux compositions témoins TM4 à TM9. La composition TM4 est une composition représentative d'une formulation utilisée pour la fabrication d'une bande de roulement. Les compositions TM5 à TM9 ont la même formulation que la composition TM4 à l'exception des taux d'oxyde de zinc et d'acide stéarique qui sont diminués progressivement, voire même supprimés. On diminue également de la même manière les taux d'oxyde de zinc et d'acide stéariques dans les compositions conformes à l'invention C5 à C9.

Les formulations des différentes compositions TM4 à TM9 et C4 à C9 sont données dans le tableau 5. Les quantités sont exprimées en parties pour 100 parties en poids d'élastomère (pce).

Le phénomène de grillage est observé via la mesure du temps de grillage (T5) selon la méthode décrite au paragraphe I.2.3. Les résultats sont également fournis dans le tableau 5.

Tableau 5 : Compositions et résultats

| **Composition** | **TM4** | **C4** | **TM5** | **C5** | **TM6** | **C6** | **TM7** | **C7** | **TM8** | **C8** | **TM9** | **C9** |
|---|---|---|---|---|---|---|---|---|---|---|---|---|
| SBR1 (a) | 100 | 100 | 100 | 100 | 100 | 100 | 100 | 100 | 100 | 100 | 100 | 100 |
| Silice (j) | 140 | - | 140 | - | 140 | - | 140 | - | 140 | - | 140 | - |
| Silice (d) | - | 97 | - | 97 | - | 97 | - | 97 | - | 97 | - | 97 |
| Agent de couplage (e) | 11,5 | 2 | 11,5 | 2 | 11,5 | 2 | 11,5 | 2 | 11,5 | 2 | 11,5 | 2 |
| Plastifiant liquide (f) | 60 | - | 60 | - | 60 | - | 60 | - | 60 | - | 60 | - |
| Plastifiant résine (g) | 57 | 45 | 57 | 45 | 57 | 45 | 57 | 45 | 57 | 45 | 57 | 45 |
| DPG | 2,3 | 0,40 | 2,3 | 0,40 | 2,3 | 0,40 | 2,3 | 0,40 | 2,3 | 0,40 | 2,3 | 0,40 |
| Noir de carbone | 6,5 | 6,5 | 6,5 | 6,5 | 6,5 | 6,5 | 6,5 | 6,5 | 6,5 | 6,5 | 6,5 | 6,5 |
| Oxyde de zinc | 3,00 | 3,00 | 0,75 | 0,75 | 0,55 | 0,55 | 0,4 | 0,4 | 0,2 | 0,2 | 0 | 0 |
| Acide stéarique | 2,50 | 2,50 | 0,63 | 0,63 | 0,47 | 0,47 | 0,3 | 0,3 | 0,15 | 0,15 | 0 | 0 |
| Antioxydant (h) + cire | 3,50 | 3,50 | 3,50 | 3,50 | 3,50 | 3,50 | 3,50 | 3,50 | 3,50 | 3,50 | 3,50 | 3,50 |
| Accélérateur (i) | 2,5 | 2,5 | 2,5 | 2,5 | 2,5 | 2,5 | 2,5 | 2,5 | 2,5 | 2,5 | 2,5 | 2,5 |
| Soufre | 0,9 | 0,9 | 0,9 | 0,9 | 0,9 | 0,9 | 0,9 | 0,9 | 0,9 | 0,9 | 0,9 | 0,9 |
| | | | | | | | | | | | | |
| *Fraction volumique de charge* | *22,7* | *22,7* | *22,7* | *22,7* | *22,7* | *22,7* | *22,7* | *22,7* | *22,7* | *22,7* | *22,7* | *22,7* |

(suite)

| Composition | TM4 | C4 | TM5 | C5 | TM6 | C6 | TM7 | C7 | TM8 | C8 | TM9 | C9 |
|---|---|---|---|---|---|---|---|---|---|---|---|---|
| T5 en min | 27 | 30 | 10 | 30 | 10 | 30 | 10 | 30 | 9 | 26 | 8 | 20 |

(a) SBR avec 15% de motif styrène; 24 % de motif butadiène -1,2 ; 30% de motif butadiène cis-1,4 ; 46% de motif butadiène trans-1,4 ; ce SBR a une température de transition vitreuse Tg égale à -65°C (Tg, mesurée selon ASTM D3418);
(j) Silice «Zeosil1165MP » de la société Solvay ayant une surface spécifique BET 160 $m^2/g$. C'est une silice précipitée. Son indice de sphéricité est inférieur à 0,5.
(d) Silice «UFP-40» de la société Denki Kagaku Kogyo Kabushiki (DENKA) ayant une surface spécifique BET 40 $m^2/g$, une taille médiane des nanoparticules de 60 nm, un nombre de groupe silanol par $nm^2$ est égal à 8 et un indice de sphéricité de 0,92. C'est une silice fondue.
(e) Silane TESPT « SI69 » de la société Evonik ;
(f) Huile TDAE « Flexon 630 » de la société Shell ;
(g) Résine « Escorez 2173 » de la société Exxon; Cette résine a une Tg de 42°C, (Tg, mesurée selon ASTM D3418) ;
(h) Antioxydant « Santoflex 6PPD » de la société Solutia ; Le ratio massique de cire par rapport à l'antioxydant est 0,75
(i) Accélérateur « Santocure CBS » de la société Solutia ;

On constate que lorsque que les taux d'oxyde de zinc et d'acide stéarique sont diminués ou supprimés dans les compositions témoins (TM5 à TM8 ou TM9), le temps de grillage est diminué de 60% de sa valeur par rapport au temps de grillage d'une composition témoin comprenant des quantités usuelles d'oxyde de zinc et d'acide stéarique (composition témoin T4). Les compositions témoins TM5 à TM9 présentent une vulcanisation prématurée (« scorching ») et sont extrêmement difficiles à travailler et à mettre en œuvre industriellement.

En revanche et de manière surprenante dans les compositions de l'invention (composition C5 à C8 ou C9), lorsque les taux d'oxyde de zinc et d'acide stéarique sont diminués ou supprimés de la même manière que pour les compositions témoins (composition TM5 à TM8 ou TM9), la diminution du temps de grillage est très faible.

En effet, le temps de grillage des compositions C5 à C7 dont le taux d'oxyde de zinc a été diminué jusqu'à 0,28 pce et celui de l'acide stéarique jusqu'à 0,31 pce ont le même temps de grillage que celui de la composition C4. On n'observe pas de vulcanisation prématurée pour ces compositions.

Lorsqu'on diminue encore plus les taux d'oxyde de zinc et d'acide stéarique (compositions C8) ou qu'on supprime ces deux constituants (composition C9) on observe une baisse de 30% de la valeur du temps de grillage. Le temps de grillage obtenu pour les compositions C8 et C9 n'est pas rédhibitoire pour une utilisation industrielle de ces compositions.

• Essai 4

Cet essai a pour but d'illustrer, les propriétés améliorées d'un pneumatique ou d'une bande de roulement comprenant une composition de caoutchouc conforme à l'invention comparées à un pneumatique ou à une bande de roulement ayant de très bonnes propriétés d'adhérence et de résistance au roulement. La comparaison s'effectue à iso-rigidité.

Les compositions T0 et C1 de l'essai n°2 ont été utilisées dans cet essai comme bandes de roulement de pneumatiques à carcasse radiale. La dimension des pneumatiques utilisée est 225/45 R17. Les bandes de roulements et les pneumatiques comprenant ces bandes de roulement sont obtenus selon des procédés de mise en forme et de confection bien connus de l'homme du métier et sont en tout point identique pour les deux bandes de roulement et les deux pneumatiques hormis la composition de caoutchouc constitutive des bandes de roulement : la composition T0 est utilisée pour la bande de roulement du pneumatique témoin PT0 et la composition C1 est utilisée pour la bande de roulement du pneumatique conforme à l'invention PC1.

Les pneumatiques ont d'abord testés sur machine pour la détermination de leur résistance au roulement, puis montés sur véhicules pour les tests d'adhérence et d'usure. L'ensemble des résultats est résumé dans le tableau n°6.

Tableau 6 : Résultats essais pneumatique

| Pneumatique | PT0 | PC1 |
|---|---|---|
| Résistance au roulement | 100 | 140 |
| Adhérence sur sol sec | 100 | 100 |
| Usure | 100 | 95 |

A la lecture du tableau 6, on constate, de manière surprenante, que le pneumatique PC1 conforme à la présente invention présente une résistance au roulement très significativement améliorée (40% meilleure que celle du pneumatique témoin) tout en conservant une résistance à l'usure comparable à celle du pneumatique PT0 utilisé comme témoin et présente une adhérence sur sol sec équivalente à celle du pneumatique témoin. Le pneumatique témoin PT0 est connu pour présenter un bon compromis de propriétés -résistance au roulement/usure/adhérence sur sol sec. Cet exemple illustre donc de manière très claire l'avantage de la présente invention pour accéder à un compromis amélioré de performances en pneumatique.

## Revendications

1. Composition de caoutchouc à base d'un ou plusieurs élastomère(s) diénique(s), d'au moins une charge renforçante, d'au moins un agent de couplage, d'au moins un système de réticulation chimique, dans laquelle la charge renforçante comprend de la silice sous forme de nanoparticules essentiellement sphériques présentant un indice de sphéricité supérieur ou égal à 0,80 mesuré selon la méthode décrite dans la description la surface spécifique BET de cette silice allant de 30 $m^2/g$ à 250 $m^2/g$.

2. Composition selon la revendication 1, **caractérisée en ce que** la silice sous forme de nanoparticules essentiellement sphériques présente un nombre de groupe silanol par $nm^2$ supérieur ou égal à 4.

3. Composition selon la revendication 1 ou 2, **caractérisée en ce que** la silice sous forme de nanoparticules essentiellement sphériques est une silice fondue.

4. Composition selon l'une quelconque des revendications 1 à 3, **caractérisée en ce que** le taux de silice sous forme de nanoparticules essentiellement sphériques va de 60 à 250 pce.

5. Composition selon l'une quelconque des revendications 1 à 4, **caractérisée en ce que** le ou les élastomère(s) diénique(s) est (sont) choisi(s) parmi le caoutchouc naturel, les polyisoprènes de synthèse, les polybutadiènes, les copolymères de butadiène, les copolymères d'isoprène et les mélanges de ces élastomères.

6. Composition selon l'une quelconque des revendications 1 à 5, **caractérisée en ce que** la silice sous forme de nanoparticules essentiellement sphériques est la charge renforçante majoritaire.

7. Composition selon l'une quelconque des revendications 1 à 6, **caractérisée en ce que** la composition comprend en outre du noir de carbone.

8. Composition selon l'une quelconque des revendications 1 à 7, **caractérisée en ce que** le taux total de charge(s) renforçante(s) va de 60 à 300 pce.

9. Composition selon l'une quelconque des revendications 1 à 8, **caractérisée en ce que** la composition comprend en outre de 10 à 220 pce d'agent plastifiant choisi parmi les résines plastifiantes présentant une température de transition vitreuse supérieure à 20°C, les plastifiants liquides à température ambiante et leurs mélanges.

10. Composition selon l'une quelconque des revendications 1 à 9, **caractérisée en ce que** le système de réticulation chimique est un système de vulcanisation qui comprend du soufre, de 0 à 1 pce de zinc et de 0 à 1 pce d'acide gras.

11. Procédé pour préparer une composition de caoutchouc, notamment pour la fabrication de pneumatiques, **caractérisé en ce qu'**il comprend au moins les étapes suivantes :

    - incorporer à ou aux élastomères diéniques, au cours d'une première étape, au moins une charge renforçante et au moins un agent de couplage, en malaxant thermo-mécaniquement le tout, en une ou plusieurs fois, jusqu'à atteindre une température maximale comprise entre 110°C et 190°C, ladite charge renforçante comprenant une silice sous forme de nanoparticules essentiellement sphériques, la surface spécifique BET de cette silice allant de 30 $m^2/g$ à 250 $m^2/g$;
    - incorporer ensuite, au cours d'une seconde étape, un système de réticulation et malaxer le tout jusqu'à une température maximale inférieure à 110°C, préférentiellement inférieure à 80°C.

12. Article semi-fini en caoutchouc pour pneumatique comprenant au moins une composition de caoutchouc réticulable

ou réticulée définie selon l'une quelconque des revendications 1 à 10 ou susceptible d'être obtenue selon le procédé défini selon la revendication 11.

**13.** Article selon la revendication 12, **caractérisé en ce qu'**il est une bande de roulement.

**14.** Pneumatique, **caractérisé en ce qu'**il comporte au moins un article semi-fini défini selon la revendication 12 ou 13.

**Patentansprüche**

**1.** Kautschukzusammensetzung auf Basis von einem oder mehreren Dienelastomeren, mindestens einem verstärkenden Füllstoff, mindestens einem Kupplungsmittel und mindestens einem chemischen Vernetzungssystem, wobei der verstärkende Füllstoff Siliciumdioxid in Form von im Wesentlichen kugelförmigen Nanoteilchen mit einem gemäß der in der Beschreibung beschriebenen Methode gemessenen Sphärizitätsindex größer oder gleich 0,80 umfasst, wobei die spezifische BET-Oberfläche dieses Siliciumdioxids im Bereich von 30 $m^2/g$ bis 250 $m^2/g$ liegt.

**2.** Zusammensetzung nach Anspruch 1, **dadurch gekennzeichnet, dass** das Siliciumdioxid in Form von im Wesentlichen kugelförmigen Nanoteilchen eine Zahl von Silanolgruppen pro $nm^2$ größer oder gleich 4 aufweist.

**3.** Zusammensetzung nach Anspruch 1 oder 2, **dadurch gekennzeichnet, dass** es sich bei dem Siliciumdioxid in Form von im Wesentlichen kugelförmigen Nanoteilchen um ein Quarzglas handelt.

**4.** Zusammensetzung nach einem der Ansprüche 1 bis 3, **dadurch gekennzeichnet, dass** der Gehalt an Siliciumdioxid in Form von im Wesentlichen kugelförmigen Nanoteilchen im Bereich von 60 bis 250 phe liegt.

**5.** Zusammensetzung nach einem der Ansprüche 1 bis 4, **dadurch gekennzeichnet, dass** das Dienelastomer bzw. die Dienelastomere aus Naturkautschuk, synthetischen Polyisoprenen, Polybutadienen, Butadien-Copolymeren, Isopren-Copolymeren und Mischungen dieser Elastomere ausgewählt ist bzw. sind.

**6.** Zusammensetzung nach einem der Ansprüche 1 bis 5, **dadurch gekennzeichnet, dass** es sich bei dem Siliciumdioxid in Form von im Wesentlichen kugelförmigen Nanoteilchen den hauptsächlichen verstärkenden Füllstoff handelt.

**7.** Zusammensetzung nach einem der Ansprüche 1 bis 6, **dadurch gekennzeichnet, dass** die Zusammensetzung außerdem Ruß umfasst.

**8.** Zusammensetzung nach einem der Ansprüche 1 bis 7, **dadurch gekennzeichnet, dass** der Gesamtgehalt an verstärkendem Füllstoff bzw. verstärkenden Füllstoffen von im Bereich von 60 bis 300 phe liegt.

**9.** Zusammensetzung nach einem der Ansprüche 1 bis 8, **dadurch gekennzeichnet, dass** die Zusammensetzung außerdem 10 bis 220 phe Weichmacher umfasst, der aus weichmachenden Harzen mit einer Glasübergangstemperatur von mehr als 20 °C, bei Umgebungstemperatur flüssigen Weichmachern und Mischungen davon ausgewählt ist.

**10.** Zusammensetzung nach einem der Ansprüche 1 bis 9, **dadurch gekennzeichnet, dass** es sich bei dem chemischen Vernetzungssystem um ein Vulkanisationssystem handelt, das Schwefel, 0 bis 1 phe Zink und 0 bis 1 phe Fettsäure umfasst.

**11.** Verfahren zur Herstellung einer Kautschukzusammensetzung, insbesondere zur Herstellung von Reifen, **dadurch gekennzeichnet, dass** es mindestens die folgenden Schritte umfasst:

- Einarbeiten mindestens eines verstärkenden Füllstoffs und mindestens eines Kupplungsmittels in das Dienelastomer bzw. die Dienelastomere im Lauf eines ersten Schritts durch ein- oder mehrmaliges thermomechanisches Kneten des Ganzen bis zum Erreichen einer Höchsttemperatur zwischen 110 °C und 190 °C, wobei der verstärkende Füllstoff Siliciumdioxid in Form von im Wesentlichen kugelförmigen Nanoteilchen umfasst, wobei die spezifische BET-Oberfläche dieses Siliciumdioxids im Bereich von 30 $m^2/g$ bis 250 $m^2/g$ liegt;
- anschließendes Einarbeiten eines Vernetzungssystems und Kneten des Ganzen bis zu einer Höchsttemperatur von weniger als 110 °C, vorzugsweise weniger als 80 °C, im Lauf eines zweiten Schritts.

**12.** Kautschukhalbzeug für Reifen, umfassend mindestens eine vernetzbare oder vernetzte Kautschukzusammensetzung gemäß einem der Ansprüche 1 bis 10 oder Kautschukzusammensetzung, die nach dem Verfahren gemäß Anspruch 11 erhältlich ist.

**13.** Halbzeug nach Anspruch 12, **dadurch gekennzeichnet, dass** es sich um eine Lauffläche handelt.

**14.** Reifen, **dadurch gekennzeichnet, dass** er mindestens ein Halbzeug gemäß Anspruch 12 oder 13 umfasst.

## Claims

**1.** Rubber composition based on one or more diene elastomer(s), on at least one reinforcing filler, on at least one coupling agent, on at least one chemical crosslinking system, wherein the reinforcing filler comprises silica in the form of essentially spherical nanoparticles having a sphericity index of greater than or equal to 0.80, the BET specific surface area of this silica ranging from 30 $m^2/g$ to 250 $m^2/g$.

**2.** Composition according to Claim 1, **characterized in that** wherein the silica in the form of essentially spherical nanoparticles has a number of silanol groups per $nm^2$ of greater than or equal to 4.

**3.** Composition according to claim 1 or 2, **characterized in that** the silica in the form of essentially spherical nanoparticles is a fused silica.

**4.** Composition according to one of Claims 1 to 3, **characterized in that** the content of the silica in the form of essentially spherical nanoparticles ranges from 60 to 250 phr.

**5.** Composition according to anyone of Claims 1 to 4, **characterized in that** the diene elastomer(s) is (are) selected from natural rubber, synthetic polyisoprenes, polybutadienes, butadiene copolymers, isoprene copolymers and the mixtures of these elastomers.

**6.** Composition according to any one of Claims 1 to 5, **characterized in that** the silica in the form of essentially spherical nanoparticles is the predominant reinforcing filler.

**7.** Composition according to one of Claims 1 to 6, **characterized in that** the composition further comprises carbon black.

**8.** Composition according to any one of Claims 1 to 7, **characterized in that** the total content of reinforcing filler(s) ranges from 60 to 300 phr.

**9.** Composition according to any one of Claims 1 to 8, **characterized in that** the composition also comprises from 10 to 220 phr of plasticizing agent selected from plasticizing resins having a glass transition temperature of greater than 20°C, plasticizers that are liquid at room temperature and mixtures thereof.

**10.** Composition according to any one of Claims 1 to 9, **characterized in that** the chemical crosslinking system is a vulcanization system which comprises sulfur, from 0 to 1 phr of zinc and from 0 to 1 phr of fatty acid.

**11.** Process for preparing a rubber composition, especially for the manufacture of tires, **characterized in that** it comprises at least the following steps:

- incorporating, in the diene elastomer(s), during a first step, at least one reinforcing filler and at least one coupling agent, everything being kneaded thermomechanically, once or several times, until a maximum temperature of between 110°C and 190°C is reached, said reinforcing filler comprising a silica in the form of essentially spherical nanoparticles, the BET specific surface area of this silica ranging from 30 $m^2/g$ to 250 $m^2/g$; and
- subsequently incorporating, during a second step, a crosslinking system and kneading everything up to a maximum temperature of less than 110°C, preferentially of less than 80°C.

**12.** Semi-finished rubber article for a tire, comprising at least one crosslinkable or crosslinked rubber composition defined according to any one of Claims 1 to 10 or able to be obtained according to the process defined according to Claim 11.

**13.** Article according to Claim 12, **characterized in that** it is a tread.

**14.** Tire, **characterized in that** it comprises at least one semi-finished article defined according to Claim 12 or 13.

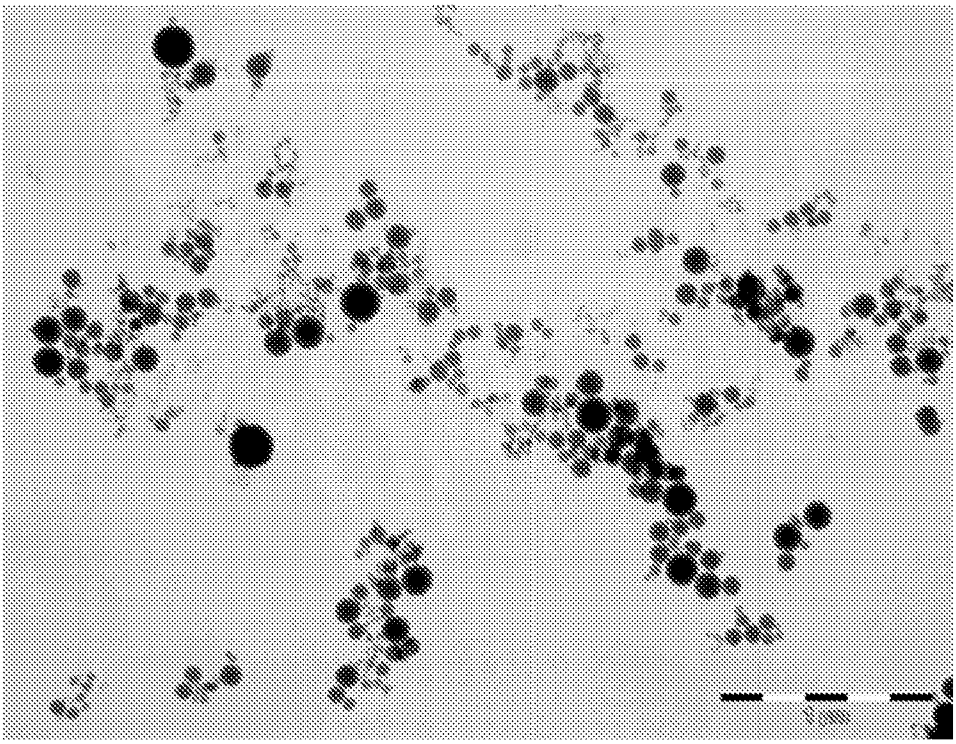

Fig. 1

## RÉFÉRENCES CITÉES DANS LA DESCRIPTION

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

### Documents brevets cités dans la description


- WO 2012069585 A1
- EP 2336231 A1
- WO 2015097195 A
- FR 2740778
- US 6013718 A
- WO 2008141702 A
- FR 2765882
- US 5977238 A
- WO 0192402 A
- US 6815473 B
- WO 2004096865 A
- US 20060089445 A
- EP 1127909 A
- US 6503973 B
- WO 2009000750 A
- WO 2009000752 A
- WO 2010072761 A
- WO 2011042507 A
- WO 03016837 A
- WO 9928376 A
- WO 0073372 A
- WO 02053634 A
- WO 2004003067 A
- WO 2004056915 A
- WO 9736724 A
- WO 9916600 A
- WO 2006069792 A
- WO 2006069793 A
- WO 2008003434 A
- WO 2008003435 A
- WO 03002648 A
- US 2005016651 A
- WO 03002649 A
- US 2005016650 A
- WO 02083782 A
- US 2004132880 A
- WO 0230939 A
- US 6774255 B
- WO 0231041 A
- US 2004051210 A
- WO 2006125532 A
- WO 2006125533 A
- WO 2006125534 A
- US 6849754 B
- WO 9909036 A
- WO 2006023815 A
- WO 2007098080 A
- WO 02088238 A
- WO 0210269 A
- EP 0501227 A
- EP 0735088 A
- EP 0810258 A


### Littérature non-brevet citée dans la description


- **BRUNAUER-EMMET-TELLER.** *The Journal of American Chemical Society,* Février 1938, vol. 60, 309
- **WALDELL ; HAKON.** Volume, Shape and Roundness of Quartz particles. *Journal of Geology,* vol. 43 (3), 250-280
- **S. OTTO et al.** *Kautschuk Gummi Kunststoffe,* vol. 58
- **W.STOEBER ; A. FINK ; E.BOHM.** *J.colloid Inter.Sci,* 1968, vol. 26, 62-69
- l'encyclopédie Kirk-Othmer « Encyclopedia of chemical technology. vol. 21, 1027-1028
- **R. MILDENBERG ; M. ZANDER ; G. COLLIN.** Hydrocarbon Resins. VCH, 1997